# EUROPEAN PATENT SPECIFICATION

(11) **EP 4 462 565 B1**
(45) Date of publication and mention of the grant of the patent: **22.04.2026**
(21) Application number: 23739884.7
(22) Date of filing: 05.01.2023
(51) Int. Cl.: H01M 50/209, H01M 50/242, H01M 50/249, H01M 50/291, B60L 50/64, B60L 3/00, B60L 50/60, B60L 58/21

(54) **BATTERY PACK AND BATTERY PACK LOWER BOX BODY**
BATTERIEPACK UND UNTERER GEHÄUSEKÖRPER FÜR BATTERIEPACK
BLOC-BATTERIE ET CORPS DE BOÎTIER INFÉRIEUR DE BLOC-BATTERIE

(30) Priority: 17.01.2022 CN 202220112306 U
(43) Date of publication of application: 13.11.2024
(73) Proprietor: Contemporary Amperex Technology Co., Limited, Ningde, Fujian 352100 (CN)
(72) Inventor: HUANG, Xiangbin, Ningde, Fujian 352100 (CN); WU, Ziqiang, Ningde, Fujian 352100 (CN); CAI, Haisheng, Ningde, Fujian 352100 (CN)
(74) Representative: Gong, Jinping
(86) International application number: PCT/CN2023/070731
(87) International publication number: WO 2023/134540

(56) References cited:
- WO-A1-2021/187219
- CN-A- 108 649 166
- CN-A- 113 875 075
- CN-U- 205 319 263
- CN-U- 207 474 541
- CN-U- 208 127 280
- CN-U- 216 850 175
- DE-A1- 102018 130 881
- DE-A1- 102018 130 881
- DE-A1- 102019 207 435
- US-A1- 2015 037 633
- US-A1- 2022 006 149
- US-A1- 2022 006 150
- US-B2- 11 217 831

## Description

### TECHNICAL FIELD

This application relates to the battery field, and specifically, to a battery pack and a battery pack lower box.

### BACKGROUND

Electric vehicle batteries provide power for new energy electric vehicles, and the safety performance of batteries during use affects the safety, durability, and stability of vehicles. During vehicle driving, the bottom of a battery pack is prone to squeeze in situations such as bumpy roads and foreign object impact, which causes damage. Therefore, it is particularly important to protect the battery pack when the bottom thereof is squeezed. WO 2021/187219 A discloses a power storage device. US 11 217 831 B2 discloses a safety apparatus for a battery. DE 10 2018 130881 A1 discloses a traction battery for a vehicle. US 2022/006149 A1 discloses a power storage device. DE 10 2019 207435 A1 discloses an underride guard for a vehicle. US 2022/006150 A1 discloses a battery containment system. US 2015/037633 A1 discloses a battery pack that includes a case and a battery module including secondary cells.

### SUMMARY

In view of the above problems, this application provides a battery pack and a battery pack lower box for alleviating the problem of bottom damage of a battery pack caused by squeeze.

The present invention is defined by the independent claims. Advantageous embodiments are described in the dependent claims, the following description and the drawings. According to a first aspect, this application provides a battery pack. The battery pack includes a battery pack lower box and a battery module. The battery pack lower box has a box bottom wall, the battery module has a module bottom wall, and the battery pack further includes a pressure regulating member in a wedge shape. The box bottom wall has a module opposition region, where the module opposition region has a transverse direction and is disposed opposite the module bottom wall, and the transverse direction is consistent with a height direction of battery cells of the battery module. The pressure regulating member is disposed in the module opposition region. The pressure regulating member has a first side and a second side in the transverse direction, the first side being closer to a battery top cover of the battery cell than the second side and the second side being closer to a battery bottom wall of the battery cell than the first side. The pressure regulating member has a spacing with the module bottom wall, a spacing from the first side being greater than a spacing from the second side. In the technical solution of the embodiments of this application, the spacing between the first side of the pressure regulating member close to the battery top cover and the module bottom wall is large, and the spacing between the second side of the pressure regulating member close to the battery bottom wall and the module bottom wall is small. In a case that the bottom of the battery pack is squeezed, the box bottom wall is squeezed and deformed to move upward, and then drives the pressure regulating member to move upward. The second side of the pressure regulating member with a small spacing first comes into contact with a position of the module bottom wall close to the battery bottom wall, and then the first side of the pressure regulating member with a large spacing comes into contact with a position of the module bottom wall close to the battery top cover, so that the position of the module bottom wall close to the battery bottom wall bears a larger squeezing force first, and then the position of the module bottom wall close to the battery top cover bears a smaller squeezing force. As a result, the module bottom wall first transmits a larger squeezing force to a position on the battery cell far from the battery top cover and close to the battery bottom wall, and then transmits a smaller squeezing force to a position on the battery cell close to the battery top cover. A welded region between the battery top cover and a battery housing has a low bearing capacity, and such a design protects the welded region under a squeezing condition.

In some embodiments, the battery pack lower box further includes a reinforcer and a load-bearing wall for bearing the battery module, and in the transverse direction, the reinforcer is disposed between two module opposition regions and connected to the load-bearing wall, and supports the box bottom wall. In the technical solution of the embodiments of this application, the two module opposition regions on the box bottom wall are prone to large deformation when squeezed, and therefore, with the reinforcer disposed at that position and connected to the load-bearing wall and the box bottom wall, when the bottom of the battery pack is squeezed, a squeezing force applied to the box bottom wall is transmitted to the load-bearing wall through the reinforcer, and the load-bearing wall and the reinforcer resist an upward movement caused by the squeezing and deformation of the box bottom wall. This reduces displacement of the box bottom wall intruding into the battery pack lower box, and protects the structures such as the battery module in the battery pack lower box.

In some embodiments, the reinforcer includes a platform part and a ridge part, the platform part sticks close to the box bottom wall, and the ridge part protrudes from the platform part into the battery pack lower box and is connected to the load-bearing wall. In the technical solution of the embodiments of this application, the reinforcer is disposed to stick close to the box bottom wall through the platform part, allowing for a large-area surface contact between the reinforcer and the box bottom wall, so that the load-bearing wall and the reinforcer have a good effect in preventing the box bottom wall from intruding into the battery pack lower box under squeezing and deformation.

In some embodiments, the reinforcer is disposed between the first sides of the two pressure regulating members facing towards each other. In the technical solution of the embodiments of this application, there are multiple positions between the two module opposition regions on the box bottom wall. The position between the two module opposition regions between the first sides of the two pressure regulating members facing towards each other is closer to a position of the module bottom wall close to the battery top cover. If the box bottom wall is squeezed and deformed at that position, the welded region between the battery top cover and a battery housing with a low bearing capacity is prone to squeeze. Therefore, the reinforcer is disposed between the first sides of the two pressure regulating members facing towards each other to prevent the box bottom wall from intruding into that position under deformation, so as to protect the welded region.

In some embodiments, the box bottom wall further has a longitudinal direction perpendicular to the transverse direction, and the reinforcer is disposed on a center line in the longitudinal direction. In the technical solution of the embodiments of this application, the box bottom wall has a weak capability to resist squeezing and deformation at the center line in the longitudinal direction, and therefore at the center line in the longitudinal direction, the box bottom wall is likely to intrude to a large extent under squeezing and deformation, damaging the structures such as the battery module in an accommodating space of the battery pack lower box. The reinforcer is disposed at the center line in the longitudinal direction to improve the capability of the box bottom wall to resist squeezing and deformation, so as to protect the structures such as the battery module.

In some embodiments, the box bottom wall further has a longitudinal direction perpendicular to the transverse direction, and pressure regulating members are disposed on two sides of a center line in the longitudinal direction respectively. In the technical solution of the embodiments of this application, the box bottom wall has a weak capability to resist squeezing and deformation at the center line in the longitudinal direction, and therefore at the center line in the longitudinal direction, the box bottom wall is likely to intrude to a large extent under squeezing and deformation. The pressure regulating members are disposed on the two sides of the center line in the longitudinal direction, so that the structures such as the battery module on the two sides of the center line are protected when the box bottom wall is squeezed at the center line in the longitudinal direction.

In some embodiments, the battery pack further includes a cushion member, and the cushion member is disposed between the pressure regulating member and the module bottom wall. In the technical solution of the embodiments of this application, when the box bottom wall is subjected to impact, the cushion member reduces an impact force transmitted from the pressure regulating member to the module bottom wall, and thus reduces an impact force transmitted from the module bottom wall to the battery cell, protecting the battery module and the battery cell.

According to a second aspect, this application provides a battery pack lower box. The battery pack lower box includes a box bottom wall, where the battery pack lower box further includes a pressure regulating member in a wedge shape. The box bottom wall has a module opposition region, where the module opposition region has a transverse direction and is disposed opposite a module bottom wall of a battery module, and the transverse direction is consistent with a height direction of battery cells of the battery module. The pressure regulating member is disposed in the module opposition region. The pressure regulating member has a first side and a second side in the transverse direction, the first side being closer to a battery top cover of the battery cell than the second side, the second side being closer to a battery bottom wall of the battery cell than the first side, and height of the first side being lower than height of the second side. In the technical solution of the embodiments of this application, the height of the first side of the pressure regulating member close to the battery top cover is small, and the height of the second side of the pressure regulating member close to the battery bottom wall is large. In a case that the bottom of the battery pack is squeezed, the box bottom wall is squeezed and deformed to move upward, and then drives the pressure regulating member to move upward. The second side of the pressure regulating member with a large height first comes into contact with a position of the module bottom wall close to the battery bottom wall, and then the first side of the pressure regulating member with a small height comes into contact with a position of the module bottom wall close to the battery top cover, so that the position of the module bottom wall close to the battery bottom wall bears a larger squeezing force first, and then the position of the module bottom wall close to the battery top cover bears a smaller squeezing force. Thus, the module bottom wall transmits a small squeezing force to the battery top cover. A welded region between the battery top cover and the battery housing has a low bearing capacity, and such a design protects the welded region under a squeezing condition.

In some embodiments, the battery pack lower box further includes a reinforcer and a load-bearing wall for bearing the battery module, and in the transverse direction, the reinforcer is disposed between two module opposition regions and connected to the load-bearing wall, and supports the box bottom wall. In the technical solution of the embodiments of this application, the two module opposition regions on the box bottom wall are prone to large deformation when squeezed, and therefore, with the reinforcer disposed at that position and connected to the load-bearing wall and the box bottom wall, when the bottom of the battery pack is squeezed, a squeezing force applied to the box bottom wall is transmitted to the load-bearing wall through the reinforcer, and the load-bearing wall and the reinforcer resist an upward movement caused by the squeezing and deformation of the box bottom wall. This reduces displacement of the box bottom wall intruding into the battery pack lower box, and protects the structures such as the battery module in the battery pack lower box.

In some embodiments, the reinforcer includes a platform part and a ridge part, the platform part sticks close to the box bottom wall, and the ridge part protrudes from the platform part into the battery pack lower box and is connected to the load-bearing wall. In the technical solution of the embodiments of this application, the reinforcer is disposed to stick close to the box bottom wall through the platform part, allowing for a large-area surface contact between the reinforcer and the box bottom wall, so that the load-bearing wall and the reinforcer have a good effect in preventing the box bottom wall from intruding into the battery pack lower box under squeezing and deformation.

In some embodiments, the reinforcer is disposed between the first sides of the two pressure regulating members facing towards each other. In the technical solution of the embodiments of this application, there are multiple positions between two module opposition regions on the box bottom wall. The position between the two module opposition regions between the first sides of the two pressure regulating members facing towards each other is closer to a position of the module bottom wall close to the battery top cover. If the box bottom wall is squeezed and deformed at that position, the welded region between the battery top cover and a battery housing with a low bearing capacity is prone to squeeze. Therefore, the reinforcer is disposed between the first sides of the two pressure regulating members facing towards each other to prevent the box bottom wall from intruding into that position under deformation, so as to protect the welded region.

In some embodiments, the box bottom wall further has a longitudinal direction perpendicular to the transverse direction, and the reinforcer is disposed on a center line in the longitudinal direction. In the technical solution of the embodiments of this application, the box bottom wall has a weak capability to resist squeezing and deformation at the center line in the longitudinal direction, and therefore at the center line in the longitudinal direction, the box bottom wall is likely to intrude to a large extent under squeezing and deformation, damaging the structures such as the battery module in the accommodating space of the battery pack lower box. The reinforcer is disposed at the center line in the longitudinal direction to improve the capability of the box bottom wall to resist squeezing and deformation, so as to protect the structures such as the battery module.

In some embodiments, the box bottom wall further has a longitudinal direction perpendicular to the transverse direction, and pressure regulating members are disposed on two sides of a center line in the longitudinal direction respectively. In the technical solution of the embodiments of this application, the box bottom wall has a weak capability to resist squeezing and deformation at the center line in the longitudinal direction, and therefore at the center line in the longitudinal direction, the box bottom wall is likely to intrude to a large extent under squeezing and deformation. The pressure regulating members are disposed on the two sides of the center line in the longitudinal direction, so that the structures such as the battery module on the two sides of the center line are protected when the box bottom wall is squeezed at the center line in the longitudinal direction.

In some embodiments, the battery pack lower box further includes a cushion member, and the cushion member is disposed on the pressure regulating member and configured to stick close to the module bottom wall. In the technical solution of the embodiments of this application, when the box bottom wall is subjected to impact, the cushion member reduces an impact force transmitted from the pressure regulating member to the module bottom wall, and thus reduces an impact force transmitted from the module bottom wall to the battery cell, protecting the battery module and the battery cell.

### BRIEF DESCRIPTION OF DRAWINGS

Persons of ordinary skill in the art can clearly understand various other advantages and benefits by reading the detailed description of the preferred embodiments below. The accompanying drawings are merely intended to illustrate the preferred embodiments and are not intended to limit this application. Moreover, throughout the accompanying drawings, the same reference signs represent the same parts. In the accompanying drawings:
FIG. 1 is a schematic structural diagram of a vehicle according to some embodiments of this application;
FIG. 2 is a schematic structural diagram of a battery pack according to some embodiments of this application;
FIG. 3 is a schematic structural diagram of a battery cell according to some embodiments of this application;
FIG. 4 is a partial schematic structural diagram of a battery pack according to some embodiments of this application;
FIG. 5 is a schematic structural diagram of a battery pack according to some embodiments of this application;
FIG. 6 is a partial schematic structural diagram of a battery pack according to some embodiments of this application;
FIG. 7 is a schematic structural diagram of a pressure regulating member according to some embodiments of this application;
FIG. 8 is a schematic structural diagram of a pressure regulating member according to some embodiments of this application;
FIG. 9 is a schematic structural diagram of a pressure regulating member according to some embodiments of this application;
FIG. 10 is a schematic structural diagram of a cushion member according to some embodiments of this application;
FIG. 11 is a schematic structural diagram of a battery pack lower box according to some embodiments of this application;
FIG. 12 is a schematic structural diagram of a battery pack lower box according to some embodiments of this application;
FIG. 13 is a schematic structural diagram of a battery pack lower box according to some embodiments of this application;
FIG. 14 is a schematic structural diagram of a battery pack lower box according to some embodiments of this application;
FIG. 15 is a schematic structural diagram of a pressure regulating member according to some embodiments of this application;
FIG. 16 is a schematic structural diagram of a pressure regulating member according to some embodiments of this application;
FIG. 17 is a schematic structural diagram of a pressure regulating member according to some embodiments of this application; and
FIG. 18 is a schematic structural diagram of a cushion member according to some embodiments of this application.

Reference signs in specific embodiments are as follows:
vehicle 10000,
battery pack 1000, controller 2000, motor 3000,
battery pack box 100;
battery pack lower box 101;
box bottom wall 102, module opposition region 102a;
first box side plate 103;
second box side plate 104;
load-bearing wall 105;
partition 106;
reinforcer 107, platform part 107a, ridge part 107b;
battery module 200;
module housing 201, module bottom wall 201a;
battery cell 202, battery top cover 202a, battery bottom wall 202b, battery housing 202c, electrode terminal 202d;
battery assembly 203, tab 203a;
pressure regulating member 300, first side 300a, second side 300b;
cushion member 400;
battery pack box 600;
battery pack lower box 601;
box bottom wall 602, module opposition region 602a;
first box side plate 603;
second box side plate 604;
load-bearing wall 605;
partition 606;
reinforcer 607, platform part 607a, ridge part 607b;
battery module 700;
module housing 701, module bottom wall 701a;
pressure regulating member 800, first side 800a, second side 800b; and
cushion member 900.

### DESCRIPTION OF EMBODIMENTS

The following describes in detail the embodiments of technical solutions of this application with reference to the accompanying drawings. The following embodiments are merely intended for a clearer description of the technical solutions of this application and therefore are used as just examples which do not constitute any limitations on the protection scope of this application.

Unless otherwise defined, all technical and scientific terms used herein shall have the same meanings as commonly understood by those skilled in the art to which this application relates. The terms used herein are intended to merely describe the specific embodiments rather than to limit this application. The terms "include", "include", and "have" and any other variations thereof in the specification, claims and brief description of drawings of this application are intended to cover non-exclusive inclusions.

In the description of the embodiments of this application, the terms "first", "second", and the like are merely intended to distinguish between different objects, and shall not be understood as any indication or implication of relative importance or any implicit indication of the number, sequence or primary-secondary relationship of the technical features indicated. In the description of the embodiments of this application, "a plurality of" means at least two unless otherwise specifically stated.

Reference to "embodiment" herein means that specific features, structures, or characteristics described with reference to the embodiment may be included in at least one embodiment of this application. The word "embodiment" appearing in various places in the specification does not necessarily refer to the same embodiment or an independent or alternative embodiment that is exclusive of other embodiments. It is explicitly or implicitly understood by persons skilled in the art that the embodiments described herein may be combined with other embodiments.

In the description of the embodiments of this application, the term "and/or" is only an associative relationship for describing associated objects, indicating that three relationships may be present. For example, A and/or B may indicate the following three cases: presence of only A, presence of both A and B, and presence of only B. In addition, the character "/" in this specification generally indicates an "or" relationship between contextually associated objects.

In the description of the embodiments of this application, the term "a plurality of" means more than two (inclusive). Similarly, "a plurality of groups" means more than two (inclusive) groups, and "a plurality of pieces" means more than two (inclusive) pieces.

In the description of the embodiments of this application, the orientations or positional relationships indicated by the technical terms "center", "longitudinal", "transverse", "length", "width", "thickness", "upper", "lower", "front", "rear", "left", "right", "vertical", "horizontal", "top", "bottom", "inside", "outside", "clockwise", "counterclockwise", "axial", " radial", "circumferential", and the like are based on the orientations or positional relationships as shown in the accompanying drawings. These terms are merely for ease and brevity of description of the embodiments of this application rather than indicating or implying that the means or components mentioned must have specific orientations or must be constructed or manipulated according to specific orientations, and therefore shall not be construed as any limitations on embodiments of this application.

In the description of the embodiments of this application, unless otherwise specified and defined explicitly, the terms "mount", "connect", "join", and "fasten" should be understood in their general senses. For example, they may refer to a fixed connection, a detachable connection, or an integral connection, may refer to a mechanical connection or electrical connection, and may refer to a direct connection, an indirect connection via an intermediate medium, an internal communication between two elements, or an interaction between two elements. Persons of ordinary skills in the art can understand specific meanings of these terms in the embodiments of this application as appropriate to specific situations.

Electric vehicle batteries serve as a power source of new energy electric vehicles, and the safety performance of electric vehicle batteries during use affects the safety, durability, and stability of vehicles. During vehicle driving, the bottom of a battery pack is prone to squeeze in situations such as bumpy roads and foreign object impact, which causes damage. Therefore, it is particularly important to protect the battery pack when the bottom thereof is squeezed.

Currently, a battery module and a box bottom wall of a battery pack lower box are directly bonded by glue, or are provided with a cushion pad inbetween. The inventors have noted that when the bottom of a battery pack is squeezed, in addition to the cushion pad being able to absorb part of the energy, a squeezing force in a direction perpendicular to the box bottom wall causes the box bottom wall to deform. As a result, the box bottom wall intrudes into an accommodating space inside the battery pack lower box, squeezing a module bottom wall of the battery module, and hence squeezing a battery cell. This causes problems such as damage to the battery module and electrolyte leakage of the battery cell. When the battery cell is disposed laterally inside the battery module, a height direction of the battery cell is parallel to the box bottom wall of the battery pack lower box. In the height direction of the battery cell, a welded region between a battery top cover and a battery housing has a low bearing capacity. Specifically, in the height direction of the battery cell, a maximum load that the welded region can bear is the smallest. Therefore, under a working condition that the bottom of the battery pack is squeezed, the welded region between the battery top cover and the battery housing in the battery pack in which the battery cell is disposed laterally is the most vulnerable. When the box bottom wall deforms, intrudes into, and squeezes the welded region, the battery cell is most likely to experience problems such as cracking, causing damage to the battery module and electrolyte leakage of the battery cell. Reducing the squeezing force transmitted by the box bottom wall to the welded region to ensure the safety of the welded region is particularly important for ensuring the safety of the battery pack when the bottom thereof is squeezed.

In order to solve the problem of damage to the welded region between the battery top cover and the battery housing caused by the bottom of the battery pack being squeezed, the inventors have found through research that it is possible to optimize the distribution of the squeezing force on the battery cell by optimizing the method of transmitting the squeezing force from the box bottom wall to the battery cell. Specifically, the squeezing force of the box bottom wall is first transmitted to a position on the battery cell far from the battery top cover (that is, the position far from the welded region between the battery top cover and the battery housing), and then transmitted to a position on the battery cell close to the battery top cover. In this way, the position on the battery cell far from the battery top cover first bears a larger squeezing force, and then the position on the battery cell close to the battery top cover bears a smaller squeezing force. In other words, the welded region between the battery top cover and the battery housing bears a smaller squeezing force, thereby protecting the welded region.

In view of the above considerations, the inventors have conducted in-depth research and designed a battery pack. The battery pack includes a battery pack lower box and a battery module. The battery pack lower box has a box bottom wall, the battery module has a module bottom wall, and the battery pack further includes a pressure regulating member in a wedge shape. The box bottom wall has a module opposition region, where the module opposition region has a transverse direction and is disposed opposite the module bottom wall, and the transverse direction is consistent with a height direction of battery cells of the battery module. The pressure regulating member is disposed in the module opposition region. The pressure regulating member has a first side and a second side in the transverse direction, the first side being closer to a battery top cover of the battery cell than the second side and the second side being closer to a battery bottom wall of the battery cell than the first side. The pressure regulating member has a spacing with the module bottom wall, a spacing from the first side being greater than a spacing from the second side.

In such a battery pack, the spacing between the first side of the pressure regulating member close to the battery top cover and the module bottom wall is large, and the spacing between the second side of the pressure regulating member close to the battery bottom wall and the module bottom wall is small. In a case that the bottom of the battery pack is squeezed, the box bottom wall is squeezed and deformed to move upward into the accommodating space in the battery pack lower box, and then drives the pressure regulating member to move upward. The second side of the pressure regulating member with a small spacing first comes into contact with the position of the module bottom wall close to the battery bottom wall, and then the first side of the pressure regulating member with a large spacing comes into contact with the position of the module bottom wall close to the battery top cover, so that the position of the module bottom wall close to the battery bottom wall bears a larger squeezing force first, and then the position of the module bottom wall close to the battery top cover bears a smaller squeezing force. As a result, the module bottom wall first transmits a larger squeezing force to a position on the battery cell far from the battery top cover and close to the battery bottom wall, and then transmits a smaller squeezing force to a position on the battery cell close to the battery top cover. In other words, the welded region between the battery top cover and the battery housing bears a smaller squeezing force, thereby protecting the welded region under a working condition that the bottom of the battery pack is squeezed, which is beneficial to the safety of the battery pack when the bottom thereof is squeezed.

The battery pack and battery pack lower box disclosed in the embodiments of this application may be used in an electric apparatus such as a vehicle, a ship, or an aircraft, but are not limited thereto. The battery pack, battery pack lower box, and the like disclosed in this application can be used to constitute a power system of the electric apparatus. In this way, when the bottom of the battery pack is squeezed, the welded region between the battery top cover and the battery housing on the battery cell bears a smaller squeezing force, thereby protecting the welded region and facilitating the safety of the battery pack when the bottom thereof is squeezed.

An embodiment of this application provides an electric apparatus that uses a battery pack as a power source. The electric apparatus may be but is not limited to a mobile phone, a tablet, a laptop computer, an electric toy, an electric tool, an electric bicycle, an electric car, a ship, and a spacecraft. The electric toy may be a fixed or mobile electric toy, for example, a game console, an electric toy car, an electric toy ship, and an electric toy airplane. The spacecraft may include an airplane, a rocket, a space shuttle, a spaceship, and the like.

For ease of description, the electric apparatus of an embodiment of this application being a vehicle 10000 is used as an example for description of the following embodiments.

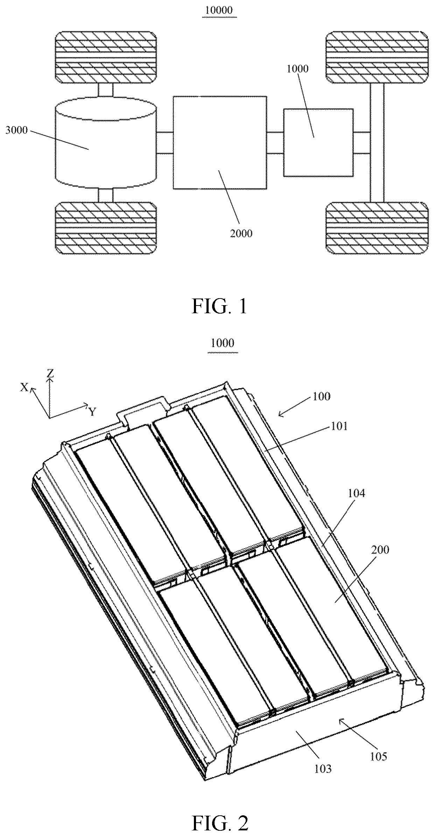

Referring to FIG. 1, FIG. 1 is a schematic structural diagram of a vehicle 10000 according to some embodiments of this application. The vehicle 10000 may be a fossil fuel vehicle, a natural-gas vehicle, or a new energy vehicle, where the new energy vehicle may be a battery electric vehicle, a hybrid electric vehicle, a range-extended vehicle, or the like. The vehicle 10000 is provided with a battery pack 1000 inside, where the battery pack 1000 may be disposed at the bottom, front or rear of the vehicle 10000. The battery pack 1000 may be configured to supply power to the vehicle 10000. For example, the battery pack 1000 may be used as an operational power source for the vehicle 10000. The vehicle 10000 may further include a controller 2000 and a motor 3000, where the controller 2000 is configured to control the battery pack 1000 to supply power to the motor 3000, for example, to satisfy power needs of start, navigation, and driving of the vehicle 10000.

In some embodiments of this application, the battery pack 1000 can be used as not only the operational power source for the vehicle 10000 but also a driving power source for the vehicle 10000, replacing or partially replacing fossil fuel or natural gas to provide driving traction for the vehicle 10000.

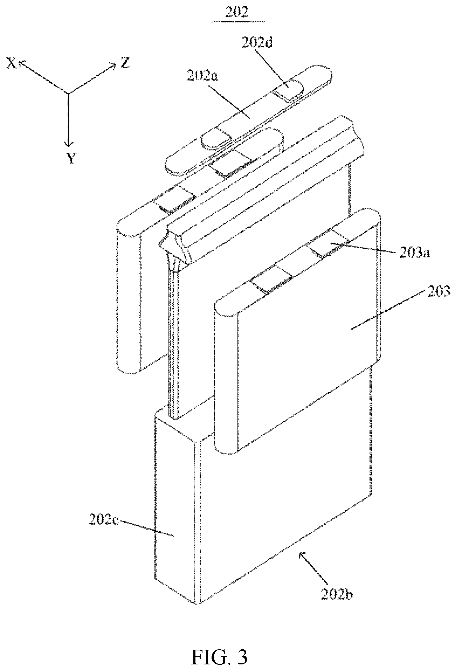

Referring to FIG. 2 and FIG. 3, FIG. 2 is a schematic structural diagram of a battery pack 1000 according to some embodiments of this application, and FIG. 3 is a schematic structural diagram of a battery cell 202 according to some embodiments of this application. The battery pack 1000 is a packaging unit of a battery module 200, and the battery pack 1000 has complete functions and can be directly used as a power source to provide electrical energy. The battery pack 1000 includes a battery pack box 100 and the battery module 200, and the battery module 200 is accommodated in battery pack box 100. The battery pack box 100 is configured to provide an accommodating space for the battery module 200. The battery pack box 100 may be a variety of structures. In some embodiments, the battery pack box 100 may include a first portion and a second portion. The first portion and the second portion fit together to jointly define an accommodating space for accommodating the battery module 200. The second portion may be a hollow structure with one end open, and the first portion may be a plate structure, where the first portion covers the open side of the second portion so that the first portion and the second portion jointly define the accommodating space. Alternatively, the first portion and the second portion may both be hollow structures with one side open, where the open side of the first portion is engaged with the open side of the second portion.

In the battery pack 1000, the battery cell 202 may be provided in plurality, and the plurality of battery cells 202 may be connected in series, parallel, or series-parallel, where being connected in series-parallel means a combination of series and parallel connections of the plurality of battery cells 202. The battery pack 1000 may be formed by connecting the plurality of battery cells 202 in series, parallel, or series-parallel to form a battery module 200 first, and then a plurality of battery modules 200 are connected in series, parallel, or series-parallel to form an entirety which is accommodated in the battery pack box 100. The battery pack 1000 may further include other structures. For example, the battery pack 1000 may further include a busbar configured to implement electrical connection between the plurality of battery cells 202.

Each battery cell 202 may be a secondary battery or a primary battery, and may be a lithium-sulfur battery, a sodium-ion battery, or a magnesium-ion battery, without being limited thereto. The battery cell 202 may be cylindrical, flat, cuboid, or of other shapes.

The battery cell 202 refers to a smallest unit constituting a battery. As shown in FIG. 3, the battery cell 202 includes a battery top cover 202a, a battery housing 202c, a battery bottom wall 202b, a battery assembly 203, and other functional components.

The battery top cover 202a refers to a component that covers an opening of the battery housing 202c to isolate an internal environment of the battery cell 202 from an external environment. Without limitation, the shape of the battery top cover 202a can be adapted to the shape of the battery housing 202c to fit with the battery housing 202c. Optionally, the battery top cover 202a may be made of a material with specified hardness and strength (for example, aluminum alloy), so that the battery top cover 202a is less likely to deform when subjected to squeeze and collision, allowing the battery cell 202 to have higher structural strength and enhanced safety performance. The battery top cover 202a may be provided with functional components such as an electrode terminal 202d. The electrode terminal 202d may be configured to be electrically connected to the battery assembly 203 for outputting or inputting electrical energy of the battery cell 202. In some embodiments, the battery top cover 202a may further be provided with a pressure relief mechanism for releasing internal pressure when the internal pressure or temperature of the battery cell 202 reaches a threshold. The battery top cover 202a may also be made of various materials, such as copper, iron, aluminum, stainless steel, and aluminum alloy. In some embodiments, an insulator may also be provided at an inner side of the battery top cover 202a. The insulator may be configured to isolate an electrically connected component in the battery housing 202c from the battery top cover 202a, so as to reduce a risk of short circuits. For example, the insulator may be made of plastic, rubber, or the like.

The battery housing 202c is an assembly configured to fit with the battery top cover 202a to form an internal environment of the battery cell 202, where the formed internal environment may be used for accommodating the battery assembly 203, an electrolyte, and other components. The battery housing 202c and the battery top cover 202a may be independent components, an opening may be provided in the battery housing 202c, and the battery top cover 202a is made to cover the opening to form the internal environment of the battery cell 202. The battery top cover 202a is welded to the battery housing 202c for closing. The battery housing 202c may be of various shapes and sizes, such as a cuboid shape, a cylindrical shape, and a hexagonal prism shape. Specifically, the shape of the battery housing 202c may be determined according to a specific shape and size of the battery assembly 203. The battery housing 202c may be made of various materials, such as copper, iron, aluminum, stainless steel, and aluminum alloy.

The battery assembly 203 is a component in the battery cell 202 in which electrochemical reactions take place. The battery housing 202c may include one or more battery assemblies 203. The battery assembly 203 is mainly formed by winding or stacking a positive electrode plate and a negative electrode plate, and a separator is generally provided between the positive electrode plate and the negative electrode plate. Parts of the positive electrode plate and the negative electrode plate with active substances constitute a body portion of the battery assembly, while parts of the positive electrode plate and the negative electrode plate without active substances constitute tabs 203a respectively. A positive tab and a negative tab may both be located at one end of the body portion or be located at two ends of the body portion respectively. During charge and discharge of the battery, a positive electrode active substance and a negative electrode active substance react with an electrolyte, and the tabs 203a are connected to the electrode terminals 202d to form a current loop.

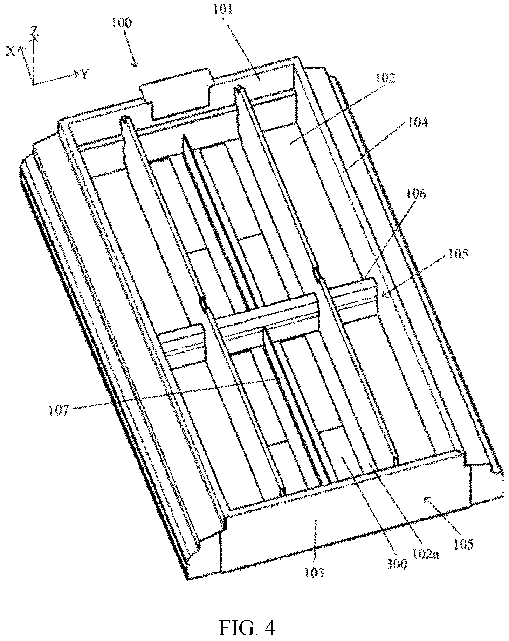

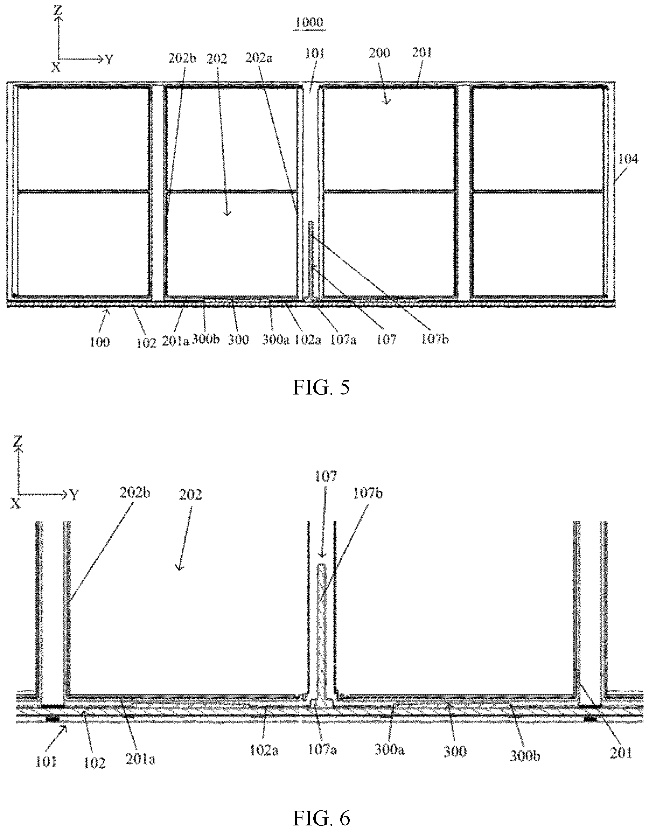

According to some embodiments of this application, still referring to FIGs. 2 and 3 and further referring to FIGs. 4 to 9, this application provides a battery pack 1000. The battery pack 1000 includes a battery pack lower box 101, a battery module 200, and a pressure regulating member 300 in a wedge shape. The battery pack lower box 101 has a box bottom wall 102. The battery module 200 has a module bottom wall 201a. The box bottom wall 102 has a module opposition region 102a, where the module opposition region 102a has a transverse direction and is disposed opposite the module bottom wall 201a, and the transverse direction is consistent with a height direction of battery cells 202 of the battery module 200. The pressure regulating member 300 is disposed in module opposition region 102a. The pressure regulating member 300 has a first side 300a and a second side 300b in the transverse direction. The first side 300a is closer to a battery top cover 202a of the battery cell 202 than the second side 300b. The second side 300b is closer to a battery bottom wall 202b of the battery cell 202 than the first side 300a. The pressure regulating member 300 has a spacing from the module bottom wall 201a, and a spacing from the first side 300a is greater than a spacing from the second side 300b.

When the battery pack 1000 is applied to a vehicle, the bottom of the battery pack box 100 in a height direction of the box (that is, direction Z of the coordinate system in the figure) is close to a vehicle floor, and is prone to squeeze and impact. In the first portion and the second portion of the battery pack box 100, the battery pack lower box 101 is a part having the bottom (that is, close to the vehicle floor) in the height direction of the box. The battery pack lower box 101 defines the bottom of the accommodating space used for accommodating the battery module 200 to be substantially flat in the height direction of the box. In some embodiments, the vehicle floor is another entity in a deployment environment of the battery pack 1000.

The box bottom wall 102 is the bottom of the battery pack lower box 101 in the height direction of the box, close to the vehicle floor. The box bottom wall 102 is a thin plate and disposed horizontally (that is, perpendicular to the direction Z of the coordinate system in the figure). The battery pack lower box 101 defines the bottom of the accommodating space used for accommodating the battery module 200 to be substantially flat in the height direction of the box.

The module bottom wall 201a is the bottom of the module housing 201 in the battery module 200 in the height direction of the box. The module bottom wall 201a is close to but not in contact with the box bottom wall 102. The module bottom wall 201a is disposed horizontally (that is, perpendicular to the direction Z of the coordinate system in the figure), and parallel to the box bottom wall 102. As a part of the module housing 201, the module bottom wall 201a further covers the outside of multiple battery cells 202 and is close to the battery cells 202.

The height of the battery cell 202 is a maximum height from the battery top cover 202a to the battery bottom wall 202b. The IEC 61960 standard is used as an example. The height of the battery cell 202 is a maximum height N4 of battery cell specified in the IEC 61960 standard, thickness of the battery cell 202 is a maximum thickness N2 of battery cell specified in the IEC 61960 standard, and width of the battery cell 202 is a maximum width N3 of battery cell specified in the IEC 61960 standard. The battery cell 202 is laterally disposed in the battery module 200. The height direction of the battery cell 202 is a direction Y of the coordinate system in the figure, the thickness direction of the battery cell 202 is a direction X of the coordinate system in the figure, and the width direction of the battery cell 202 is the direction Z of the coordinate system in the figure. The battery bottom wall 202b is perpendicular to the direction Y of the coordinate system in the figure, and two thickness surfaces of the battery housing 202c are perpendicular to the direction Z of the coordinate system in the figure, where one thickness surface is covered by the module bottom wall 201a.

The module opposition region 102a is a region obtained by projecting the module bottom wall 201a towards the box bottom wall 102 in the direction Z of the coordinate system, and located on the box bottom wall 102 and facing towards the module bottom wall 201a. The transverse direction of the module opposition region 102a is consistent with the height direction of the battery cell 202, that is, the direction Y of the coordinate system.

The pressure regulating member 300 is disposed on the module opposition region 102a of the box bottom wall 102, located between the box bottom wall 102 and the module bottom wall 201a, and configured to adjust the force transmission manner of a squeezing force transmitted from the box bottom wall 102 to the module bottom wall 201a. The bottom surface of the pressure regulating member 300 in the height direction of the box (that is, the direction Z of the coordinate system in the figure) sticks close to the box bottom wall 102, and the top surface in the height direction of the box faces towards the module bottom wall 201a, being close to but not in contact with the module bottom wall 201a. The spacing is the distance from the top surface of the pressure regulating member 300 in the height direction of the box to the module bottom wall 201a. A cross section of the pressure regulating member 300 perpendicular to the direction X extends upwards in the direction Y, and has a first side 300a and a second side 300b. In the two sides, one side close to the battery top cover 202a is the first side 300a, and the other side close to the battery bottom wall 202b is the second side 300b. The distance from the top surface of the pressure regulating member 300 to the module bottom wall 201a is larger at the first side 300a, and the distance from the top surface of the pressure regulating member 300 to the module bottom wall 201a is smaller at the second side 300b. The distance from the top surface of the pressure regulating member 300 to the module bottom wall 201a is larger at the first side 300a, and the distance from the top surface of the pressure regulating member 300 to the module bottom wall 201a at the second side 300b, which is achieved by making the height of the first side 300a of the pressure regulating member 300 smaller than the height of the second side 300b in the height direction of the box (the direction Z of the coordinate system).

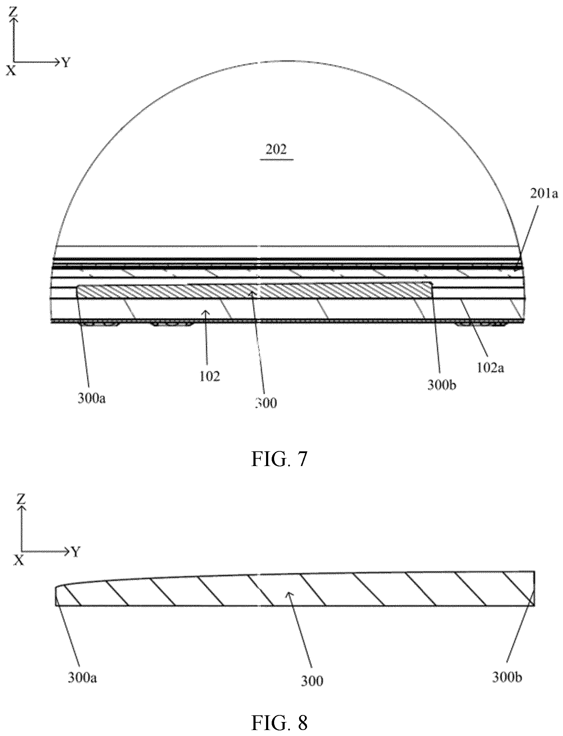

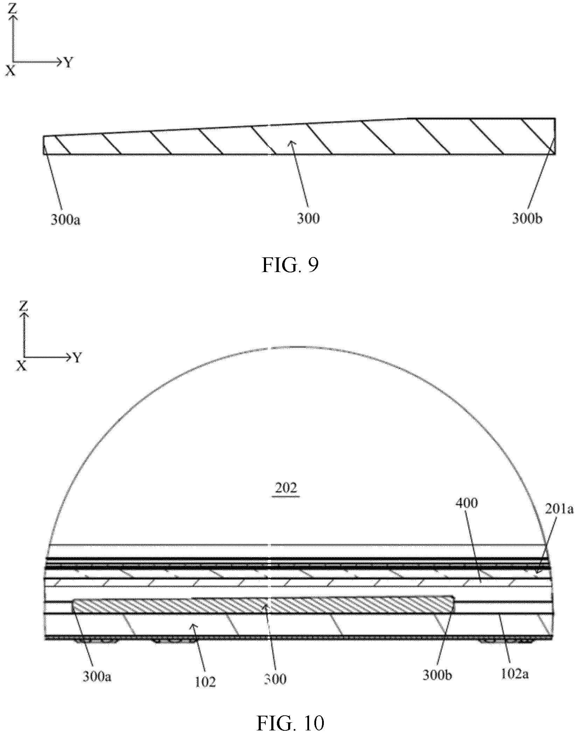

The wedge shape of the pressure regulating member 300 means that the cross section of the pressure regulating member 300 perpendicular to the direction X exhibits a trend of being low on one side and high on the other side in the direction Y. Shapes having this trend can all be understood as the wedge shape herein. As shown in FIG. 7, the cross section of the pressure regulating member 300 perpendicular to the direction X is a right trapezoid, indicating that a hypotenuse of the right trapezoid of the top surface of the pressure regulating member 300 exhibits a trend of being low on one side and high on the other side in the direction Y, which is within the scope of the meaning of the wedge shape. In other embodiments, the cross section of the pressure regulating member 300 perpendicular to the direction X is as shown in FIG. 8, indicating that a continuous curve of the top surface exhibits a trend of being low on one side and high on the other side in the direction Y, which is within the scope of the meaning of the wedge shape. In addition, a change rate of the curve gradually decreases to 0 from the first side 300a to the second side 300b. The continuous curve indicates that the top surface of the pressure regulating member 300 is a curved surface. In other embodiments, the cross section of the pressure regulating member 300 perpendicular to the direction X is as shown in FIG. 9, indicating that a continuous broken line segment of the top surface exhibits a trend of being low on one side and high on the other side in the direction Y, which is within the scope of the meaning of the wedge shape. The continuous broken line segment includes a horizontal line segment and an inclined line segment connected to the horizontal line segment. In addition, from the first side 300a to the second side 300b, the inclined line segment shows an upward trend until it is connected to the horizontal line segment. The continuous broken line segment indicates that the top surface of the pressure regulating member 300 includes an upward inclined surface and a horizontal surface connected to the inclined surface and parallel to the module bottom wall 201a.

The pressure regulating member 300 is an entity obtained by extending the cross section perpendicular to the direction X in the module opposition region 102a along the direction X. Close fitting between the module bottom wall 201a and the box bottom wall 102 limits the direction-Z size of the pressure regulating member 300 to be relatively small, and the direction-X size and direction-Y size of the pressure regulating member 300 to be relatively large, so that the overall pressure regulating member 300 takes a form of flat gasket.

The pressure regulating member 300 is made of polyhexamethylene adipamide (PA66). In other embodiments, the pressure regulating member 300 is made of other hard materials.

Close fitting between the bottom surface of the pressure regulating member 300 and the box bottom wall 102 is implemented through an adhesive. In other embodiments, the pressure regulating member 300 is integrated with the box bottom wall 102 to form an integral structure so as to achieve mechanical connection therebetween. In this case, the material of the pressure regulating member 300 is the same as the material of box bottom wall 102.

The spacing between the first side 300a of the pressure regulating member 300 close to the battery top cover 202a and the module bottom wall 201a is large, and the spacing between the second side 300b of the pressure regulating member 300 close to the battery bottom wall 202b and the module bottom wall 201a is small. When the bottom of the battery pack 1000 is squeezed, the box bottom wall 102 is squeezed and deformed to intrude into the accommodating space for accommodating the battery module 200, leading to a positive movement in the direction Z, and further leading to a positive movement of the pressure regulating member 300 in the direction Z. Coming into contact with and squeezing the module bottom wall 201a specifically means coming into contact with the top surface of the pressure regulating member 300 and squeezing the module bottom wall 201a. Since the distances from various positions of the top surface of the pressure regulating member 300 to the module bottom wall 201a in the direction Y are inconsistent, a position with a small spacing on the top surface of the pressure regulating member 300 comes into contact with and squeezes the module bottom wall 201a first, and a position with a large spacing comes into contact with and squeezes the module bottom wall 201a later. Specifically, the second side 300b of the pressure regulating member 300 with the smallest spacing first comes into contact with a position on the module bottom wall 201a close to the battery bottom wall 202b. In this case, the top surface of the pressure regulating member 300 starts to partially come into contact with the module bottom wall 201a. The first side 300a of the pressure regulating member 300 with the largest spacing finally comes into contact with a position on the module bottom wall 201a close to the battery top cover 202a. In this case, the top surface of the pressure regulating member 300 fully comes into contact with the module bottom wall 201a. This makes the position of the module bottom wall 201a close to the battery bottom wall 202b first bear a larger squeezing force, and the position of the module bottom wall 201a close to the battery top cover 202a then bear a smaller squeezing force. The module bottom wall 201a transmits the squeezing force to the battery cell 202 through a thickness surface of the battery housing 202c in the battery cell 202 covered by the module bottom wall 201a. The module bottom wall 201a first transmits a larger squeezing force to the position on the battery housing 202c far from the battery top cover 202a and close to the battery bottom wall 202b, and then transmits a smaller squeezing force to the position on the battery housing 202c close to the battery top cover 202a, thereby protecting the welded region between the battery top cover 202a and the battery housing 202c under a squeezing condition.

According to some embodiments of this application, optionally, still referring to FIGs. 2 and 4 to 6, the battery pack lower box 101 further includes a reinforcer 107 and a load-bearing wall 105 for bearing the battery module 200. In the transverse direction, the reinforcer 107 is disposed between two module opposition regions 102a and connected to the load-bearing wall 105, and supports the box bottom wall 102.

The load-bearing wall 105 is a plate in the battery pack lower box 101 for bearing the battery module 200, including two first box side plates 103 at two ends of the battery pack lower box 101 in the direction X and a partition 106 disposed in the accommodating space of the battery pack lower box 101.

The two first box side plates 103 and partition 106 are both disposed parallel to the direction Y of the coordinate system. The two ends of the first box side plates 103 and partition 106 in the direction Y are respectively connected to two second box side plates 104, and the bottoms of the first box side plates 103 and partition 106 are both connected to the box bottom wall 102.

In the direction X, the partition 106 is disposed at a middle position between the two first box side plates 103, dividing the accommodating space of the battery pack lower box 101 into two secondary accommodating spaces. The direction-X size of each secondary accommodating space is adapted to the direction-X size of one battery module 200. Each secondary accommodating space accommodates one battery module 200 in the direction X. The two ends in the direction X of the module housing 201 of the battery module 200 are respectively supported and fixed by the first box side plate 103 and partition 106, so that the module bottom wall 201a is close to but not in contact with the box bottom wall 102.

The direction-Y size of each secondary accommodating space is adapted to the direction-Y size of at least two battery modules 200. Each secondary accommodating space accommodates at least two battery modules 200 in the direction Y. Correspondingly, the at least two module opposition regions 102a are present in the direction Y of the box bottom wall 102. Specifically, each secondary accommodating space accommodates four battery modules 200 in the direction Y. Correspondingly, in the direction Y of the box bottom wall 102, there are four module opposition regions 102a and three regions between two module opposition regions 102a. In other embodiments, each secondary accommodating space accommodates another quantity of battery modules 200 in the direction Y, and the another quantity is at least two.

The reinforcer 107 is a component for transmitting the squeezing force borne by the box bottom wall 102 to the load-bearing wall 105. The reinforcer 107 is disposed in the accommodating space of the battery pack lower box 101. Specifically, the direction-Z bottom surface of the reinforcer 107 sticks close to a region between the two module opposition regions 102a on the box bottom wall 102, and extends along the direction X to connect to the first box side plate 103 and the partition 106, so that the squeezing force borne by the box bottom wall 102 under a squeezing condition is transmitted to the first box side plate 103 and the partition 106 through the reinforcer 107.

In the transverse direction (that is, the direction Y of the coordinate system) of the box bottom wall 102, the region between the two module opposition regions 102a is prone to large deformation when squeezed. Therefore, the reinforcer 107 is disposed in the region to connect to the load-bearing wall 105 so as to support the box bottom wall 102, improving the capability of the box bottom wall 102 to resist squeezing and deformation. When the box bottom wall 102 at the bottom of the battery pack 1000 is squeezed, the squeezing force applied to the box bottom wall 102 is transmitted to the first box side plate 103 and the partition 106 via the reinforcer 107. The first box side plate 103, the partition 106, and the reinforcer 107 jointly assist the box bottom wall 102 in resisting a positive movement in the direction Z caused by squeezing and deformation, reducing the displacement of the box bottom wall 102 intruding into the accommodating space of the battery pack lower box 101, thereby protecting structures such as the battery module 200 in the accommodating space of the battery pack lower box 101.

According to some embodiments of this application, optionally, still referring to FIGs. 4 to 6, the reinforcer 107 includes a platform part 107a and a ridge part 107b. The platform part 107a sticks close to the box bottom wall 102, and the ridge part 107b protrudes from the platform part 107a into the battery pack lower box 101 and is connected to the load-bearing wall 105.

The platform part 107a and the ridge part 107b are both strip-shaped plates. The direction-Z bottom surface of the platform part 107a sticks close to the region between the two module opposition regions 102a on the box bottom wall 102. The ridge part 107b protrudes from the direction-Z top surface of the platform part 107a along the direction Z into the accommodating space of the battery pack lower box 101, so that the reinforcer 107 has a T-shaped cross section perpendicular to the direction X. An entity obtained by extending the T-shaped cross section along the direction X is the reinforcer 107.

The protruding ridge part 107b is connected to the load-bearing wall 105. Specifically, a junction of the ridge part 107b and the first box side plate 103 and a junction of the ridge part 107b and the partition 106 are both welded for sufficient force transmission. The direction-Z top of ridge part 107b is roughly at the same direction-Z height as the direction-Z middle position of the battery module 200. In other embodiments, the ridge part 107b and the first box side plate 103 and partition 106 are connected in other manners.

The platform part 107a is configured to strengthen the connection between the reinforcer 107 and the box bottom wall 102. The connection relationship and connection manner between the platform part 107a and the load-bearing wall 105 are not limited herein.

The reinforcer 107 sticks close to the box bottom wall 102 through the direction-Z bottom surface of the platform part 107a, achieving a large-area surface contact between the reinforcer 107 and the box bottom wall 102, and increasing the contact area between the reinforcer 107 and the box bottom wall 102. When the box bottom wall 102 is squeezed, the load-bearing wall 105 and the reinforcer 107 have a good effect in preventing the box bottom wall 102 from intruding into the accommodating space of the battery pack lower box 101 under squeezing and deformation.

According to some embodiments of this application, optionally, still referring to FIGs. 4 to 6, the reinforcer 107 is disposed between first sides 300a of two pressure regulating members 300 facing towards each other.

In the transverse direction (that is, the direction Y of the coordinate system), there are multiple regions between the two module opposition regions 102a on the box bottom wall 102. The arrangement direction of the battery cells 202 in the battery module 200 affects disposition of the reinforcer 107 in the region between the two module opposition regions 102a. Specifically, the welded region between the battery housing 202c and the battery top cover 202a has a high priority of protection, while a region of the battery housing 202c close to the battery bottom wall 202b has a low priority of protection. Under the deployment requirements of the battery pack 1000, among all of the multiple regions between the two module opposition regions 102a, the reinforcer 107 cannot be disposed in some of the regions between the two module opposition regions 102a. In this case, the disposition of the reinforcer 107 on the regions between the two module opposition regions 102a should give priority to protecting the welded region between the battery housing 202c and the battery top cover 202a.

Specifically, there are three regions between the two module opposition regions 102a in the direction Y. The arrangement direction of the battery cells 202 in four battery modules 200 is as follows: regions between module opposition regions 102a at two ends in the direction Y are close to the battery bottom wall 202b on their both sides; a region between module opposition regions 102a at the middle position in the direction Y is close to the battery top cover 202a on its both sides; the priority of disposing the reinforcer 107 on the two regions at the two ends in the direction Y is low; and the priority of disposing the reinforcer 107 on a region at the middle position in the direction Y is high. Therefore, the reinforcer 107 on the region at the middle position in the direction Y. That is, the reinforcer 107 is disposed between the first sides 300a of the two pressure regulating members 300 facing towards each other.

The region between the two module opposition regions 102a between the first sides 300a of the two pressure regulating members 300 facing towards each other is closer to a position of the module bottom wall 201a close to the battery top cover 202a. If the box bottom wall 102 is squeezed and deformed at that region, the welded region between the battery top cover 202a and a battery housing 202c with a low bearing capacity is prone to squeeze. Therefore, the reinforcer 107 is disposed between the first sides 300a of the two pressure regulating members 300 facing towards each other to prevent the box bottom wall 102 from intruding into that region under deformation, so as to protect the welded region between the battery top cover 202a and a battery housing 202c.

According to some embodiments of this application, optionally, still referring to FIGs. 4 to 6, the box bottom wall 102 further has a longitudinal direction perpendicular to the transverse direction, and the reinforcer 107 is disposed on a center line in the longitudinal direction.

The longitudinal direction is the direction X of the coordinate system, and the center line in the longitudinal direction is a line parallel to the direction X and at the middle position in the direction Y of the box bottom wall 102. The reinforcer 107 extends on the center line along the direction X.

As a thin plate member, the box bottom wall 102 has its two edges in the direction Y respectively connected to the two second box side plates 104, having a weak capability to resist squeezing and deformation at the middle position in the direction Y. Therefore, the box bottom wall 102 is prone to large intrusion when squeezed and deformed at the middle position in the direction Y, damaging structures such as the battery module 200 in the accommodating space of the battery pack lower box 101. The center line in the longitudinal direction is located at the middle position in the direction Y.

The reinforcer 107 being disposed on the center line of the longitudinal direction of the region between the module opposition regions 102a improves the capability of the box bottom wall 102 to resist squeezing and deformation at the middle position in the direction Y, thereby protecting structures such as the battery module 200.

According to some embodiments of this application, optionally, still referring to FIGs. 4 to 6, the box bottom wall 102 further has a longitudinal direction perpendicular to the transverse direction, and pressure regulating members 300 are disposed on two sides of the center line in the longitudinal direction respectively.

The longitudinal direction is the direction X of the coordinate system, and the center line in the longitudinal direction is a line parallel to the direction X and at the middle position in the direction Y of the box bottom wall 102. Pressure regulating members 300 are disposed on two sides of the direction Y of the center line.

As a thin plate, the box bottom wall 102 has its two edges in the direction Y respectively connected to the two second box side plates 104, having a weak capability to resist squeezing and deformation at the middle position in the direction Y. Therefore, the box bottom wall 102 is prone to large intrusion when squeezed and deformed at the middle position in the direction Y, damaging structures such as the battery module 200 in the accommodating space of the battery pack lower box 101. Therefore, the pressure regulating members 300 are disposed at the module opposition regions 102a on the two sides of the middle position in the direction Y. The center line in the longitudinal direction is located at the middle position in the direction Y. The pressure regulating members 300 are disposed on two sides of the direction Y of the center line of the longitudinal direction, that is, the pressure regulating members 300 are disposed on two sides of the middle position of the direction Y of the box bottom wall 102.

Specifically, there are four module opposition regions 102a in the direction Y of the box bottom wall 102. The pressure regulating members 300 are disposed on two module opposition regions 102a on two sides of the middle position in the direction Y. However, no pressure regulating member 300 is disposed on two module opposition regions 102a at two ends in the direction Y, because the two module opposition regions 102a are adjacent to the second box side plate 104. Therefore, the box bottom wall 102 has a good capability to resist squeezing and deformation at the two module opposition regions 102a, thereby well protecting structures such as a corresponding battery module 200. In other embodiments, the pressure regulating members 300 may alternatively be disposed on the two module opposition regions 102a.

With the pressure regulating members 300 disposed at the module opposition regions 102a on the two sides of the middle position in the direction Y of the box bottom wall 102, it is ensured that when the box bottom wall 102 intrudes into the accommodating space due to significant squeezing and deformation at the middle position in the direction Y, the manner of transmitting a squeezing force from the box bottom wall 102 to the module bottom wall 201a on the two sides of the middle position in the direction Y is regulated, thereby protecting structures such as the battery modules 200 on the two sides of the middle position in the direction Y.

According to some embodiments of this application, optionally, still referring to FIG. 10, the battery pack 1000 further includes a cushion member 400. The cushion member 400 is disposed between the pressure regulating member 300 and the module bottom wall 201a.

The cushion member 400 is specifically a cushion pad. The direction-Z top surface of the cushion pad is adhered to the module bottom wall 201a by using an adhesive, and the direction-Z bottom surface of the cushion pad faces towards the top surface of the pressure regulating member 300, being close to but not in contact with the top surface of the pressure regulating member 300.

When the box bottom wall 102 is subjected to impact, the cushion member 400 reduces an impact force transmitted from the pressure regulating member 300 to the module bottom wall 201a, and thus reduces an impact force transmitted from the module bottom wall 201a to the battery cell 202, protecting the battery module 200 and the battery cell 202.

According to some embodiments of this application, referring to FIG. 2 to FIG. 7, this application provides a battery pack 1000. The battery pack 1000 includes a battery pack lower box 101, a battery module 200, and a pressure regulating member 300 in a wedge shape.

The battery module 200 has a module bottom wall 201a.

The battery pack lower box 101 has a box bottom wall 102. The box bottom wall 102 has a module opposition region 102a, where the module opposition region 102a has a transverse direction and is disposed opposite the module bottom wall 201a, and the transverse direction is consistent with a height direction of battery cells 202 of the battery module 200, namely, direction Y of the coordinate system.

The pressure regulating member 300 is disposed in the module opposition region 102a, with its bottom surface fitting the box bottom wall 102. The pressure regulating member 300 has a spacing with the module bottom wall 201a and has a top surface facing the module bottom wall 201a and being close to but not in contact with the module bottom wall 201a. The overall pressure regulating member 300 takes a form of a flat subplate, and has a right trapezoid cross section perpendicular to the direction X. An entity obtained by extending the right trapezoid cross section in the module opposition region 102a along the direction X is the pressure regulating member 300. A hypotenuse of the right trapezoid of the top surface of the pressure regulating member 300 exhibits a trend of being low on one side and high on the other side in the direction Y. The low side closer to the battery top cover 202a of the battery cell 202 is the first side 300a, and the high side closer to the battery bottom wall 202b of the battery cell 202 is the second side 300b. A spacing between the first side 300a and the module bottom wall 201a is larger than a spacing between the second side 300b and the module bottom wall 201a.

The battery pack lower box 101 further includes a reinforcer 107 and a load-bearing wall 105 for bearing the battery module 200.

The load-bearing wall 105 is a plate in the battery pack lower box 101 for bearing the battery module 200, including two first box side plates 103 at two ends of the battery pack lower box 101 in the direction X and a partition 106 disposed in the accommodating space of the battery pack lower box 101.

The two first box side plates 103 and partition 106 are both disposed parallel to the direction Y of the coordinate system. The two ends of the first box side plates 103 and partition 106 in the direction Y are respectively connected to two second box side plates 104, and the bottoms of the first box side plates 103 and partition 106 are both connected to the box bottom wall 102.

In the direction X, the partition 106 is disposed at a middle position between the two first box side plates 103, dividing the accommodating space of the battery pack lower box 101 into two secondary accommodating spaces. The direction-X size of each secondary accommodating space is adapted to the direction-X size of one battery module 200. Each secondary accommodating space accommodates one battery module 200 in the direction X. The two ends in the direction X of the module housing 201 of the battery module 200 are respectively supported and fixed by the first box side plate 103 and partition 106.

Each secondary accommodating space accommodates four battery modules 200 in the direction Y. Correspondingly, in the direction Y of the box bottom wall 102, there are four module opposition regions 102a and three regions between two module opposition regions 102a. Pressure regulating members 300 are disposed at the two module opposition regions 102a on the two sides of the middle position in the direction Y. The two pressure regulating members 300 are located on two sides of the center line in the longitudinal direction of the box bottom wall 102, while no pressure regulating member 300 is disposed at the two module opposition regions 102a at the two ends in the direction Y.

The reinforcer 107 is disposed in the region between the two module opposition regions 102a at the middle position in the direction Y, specifically extends on the center line of the longitudinal direction along the direction X, and is located between the first sides 300a of the two pressure regulating members 300 facing towards each other. The reinforcer 107 includes a platform part 107a and a ridge part 107b. The platform part 107a and the ridge part 107b are both strip-shaped plates. The bottom surface of the platform part 107a sticks close to the box bottom wall 102. The ridge part 107b protrudes from the top surface of the platform part 107a along the direction Z into the accommodating space of the battery pack lower box 101, so that the reinforcer 107 has a T-shaped cross section perpendicular to the direction X. An entity obtained by extending the T-shaped cross section along the direction X to connect to the first box side plate 103 and the partition 106 is the reinforcer 107.

A junction of the ridge part 107b and the first box side plate 103 and a junction of the ridge part 107b and the partition 106 are both welded. The direction-Z top of ridge part 107b is roughly at the same direction-Z height as the direction-Z middle position of the battery module 200.

The platform part 107a is configured to strengthen the connection between the reinforcer 107 and the box bottom wall 102. The connection relationship and connection manner between the platform part 107a and the load-bearing wall 105 are not limited herein.

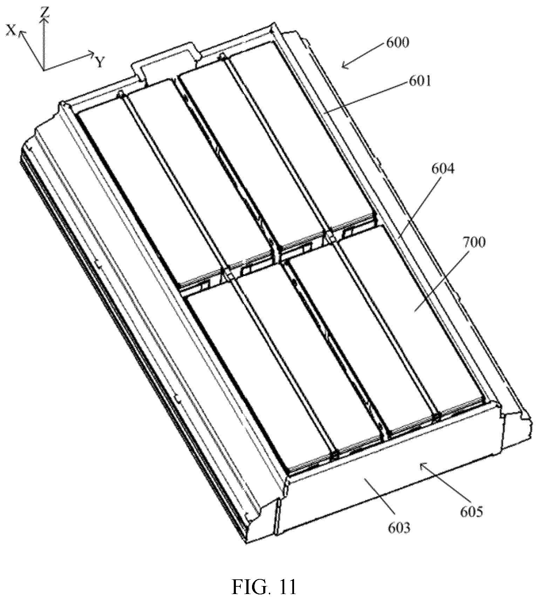

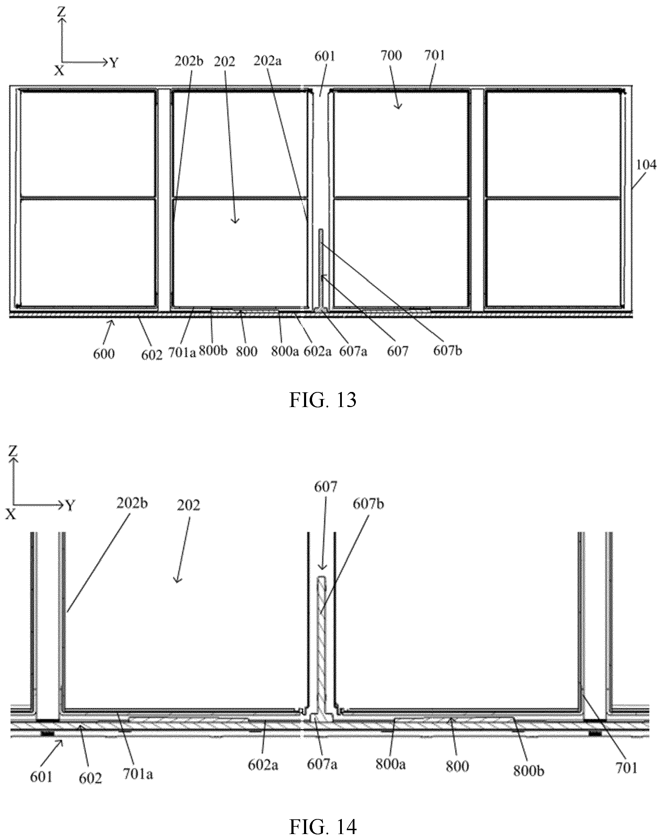

According to some embodiments of this application, referring to FIG. 11 to FIG. 17, this application provides a battery pack lower box 601. The battery pack lower box 601 includes a box bottom wall 602 and a pressure regulating member 800 in a wedge shape. The box bottom wall 602 has a module opposition region 602a, where the module opposition region 602a has a transverse direction and is disposed opposite the module bottom wall 701a of the battery module 700, and the transverse direction is consistent with a height direction of battery cells 202 of the battery module 700. The pressure regulating member 800 is disposed in the module opposition region 602a. The pressure regulating member 800 has a first side 800a and a second side 800b in the transverse direction. The first side 800a is closer to a battery top cover 202a of the battery cell 202 than the second side 800b. The second side 800b is closer to a battery bottom wall 202b of the battery cell 202 than the first side 800a. The height of the first side 800a is lower than the height of the second side 800b.

When the battery pack 1000 is applied to a vehicle, the bottom of the battery pack box 600 in a height direction of the box (that is, direction Z of the coordinate system in the figure) is close to a vehicle floor, and is prone to squeeze and impact. In the first portion and the second portion of the battery pack box 600, the battery pack lower box 601 is a part having the bottom (that is, close to the vehicle floor) in the height direction of the box. The battery pack lower box 601 defines the bottom of the accommodating space used for accommodating the battery module 700 to be substantially flat in the height direction of the box. In some embodiments, the vehicle floor is another entity in a deployment environment of the battery pack 1000.

The box bottom wall 602 is the bottom of the battery pack lower box 601 in the height direction of the box, close to the vehicle floor. The box bottom wall 602 is a thin plate and disposed horizontally (that is, perpendicular to the direction Z of the coordinate system in the figure). The battery pack lower box 601 defines the bottom of the accommodating space used for accommodating the battery module 700 to be substantially flat in the height direction of the box.

When the battery module 700 is packaged into the battery pack lower box 601, the module bottom wall 701a is the bottom of the module housing 701 in the battery module 700 in the height direction of the box. The module bottom wall 701a is close to but not in contact with the box bottom wall 602. The module bottom wall 701a is disposed horizontally (that is, perpendicular to the direction Z of the coordinate system in the figure) and parallel to the box bottom wall 602. As a part of the module housing 701, the module bottom wall 701a further covers the outside of multiple battery cells 202 and is close to the battery cells 202.

The height of the battery cell 202 is a maximum height from the battery top cover 202a to the battery bottom wall 202b. The IEC 61960 standard is used as an example. The height of the battery cell 202 is a maximum height N4 of battery cell specified in the IEC 61960 standard, thickness of the battery cell 202 is a maximum thickness N2 of battery cell specified in the IEC 61960 standard, and width of the battery cell 202 is a maximum width N3 of battery cell specified in the IEC 61960 standard. The battery cell 202 is laterally disposed in the battery module 700. When the battery module 700 is packaged into the battery pack lower box 601, the height direction of the battery cell 202 is a direction Y of the coordinate system in the figure, the thickness direction of the battery cell 202 is a direction X of the coordinate system in the figure, and the width direction of the battery cell 202 is the direction Z of the coordinate system in the figure. The battery bottom wall 202b is perpendicular to the direction Y of the coordinate system in the figure, and two thickness surfaces of the battery housing 202c are perpendicular to the direction Z of the coordinate system in the figure, where one thickness surface is covered by the module bottom wall 701a.

The module opposition region 602a is a region obtained by projecting the module bottom wall 701a towards the box bottom wall 602 in the direction Z of the coordinate system when the battery module 700 is packaged into the battery pack lower box 601. The module opposition region 602a is located on the box bottom wall 602 and faces towards the module bottom wall 701a. The transverse direction of the module opposition region 602a is consistent with the height direction of the battery cell 202, that is, the direction Y of the coordinate system.

The pressure regulating member 800 is disposed on the module opposition region 602a of the box bottom wall 602. When the battery module 700 is packaged into the battery pack lower box 601, the pressure regulating member 800 is located between the box bottom wall 602 and the module bottom wall 701a, and configured to adjust the force transmission manner of a squeezing force transmitted from the box bottom wall 602 to the module bottom wall 701a. The bottom surface of the pressure regulating member 800 in the height direction of the box (that is, the direction Z of the coordinate system in the figure) fits the box bottom wall 602, and the top surface in the height direction of the box faces towards the module bottom wall 701a, being close to but not in contact with the module bottom wall 701a. There is a spacing between the top surface of the pressure regulating member 800 in the height direction of the box and the module bottom wall 701a. The spacing is the distance from the top surface of the pressure regulating member 800 in the height direction of the box to the module bottom wall 701a. A cross section of the pressure regulating member 800 perpendicular to the direction X extends upwards in the direction Y, and the pressure regulating member 800 has a first side 800a and a second side 800b. In the two sides, one side close to the battery top cover 202a is the first side 800a, and the other side close to the battery bottom wall 202b is the second side 800b. In the height direction of the box (the direction Z of the coordinate system), the height of the first side 800a of the pressure regulating member 800 is higher than the height of the second side 800b. As such, the distance from the top surface of the pressure regulating member 800 to the module bottom wall 701a is larger at the first side 800a, and the distance from the top surface of the pressure regulating member 800 to the module bottom wall 701a is smaller at the second side 800b. The distance from the top surface of the pressure regulating member 800 to the module bottom wall 701a at the first side 800a is larger than the distance from the top surface of the pressure regulating member 800 to the module bottom wall 701a at the second side 800b.

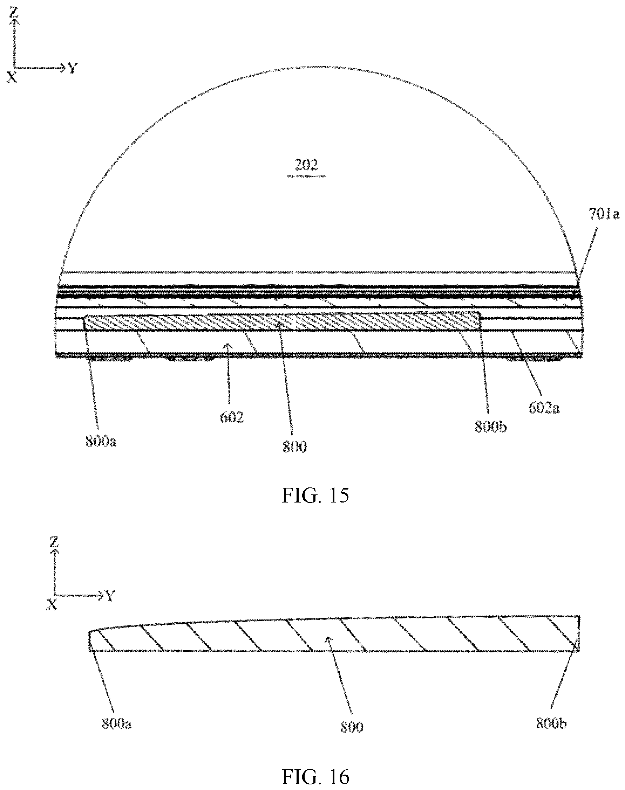

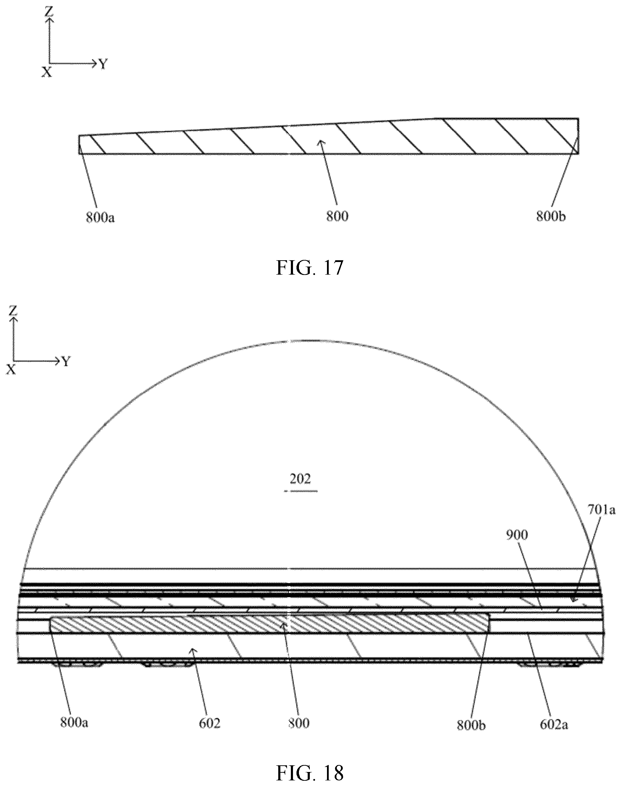

The wedge shape of the pressure regulating member 800 means that the cross section of the pressure regulating member 800 perpendicular to the direction X exhibits a trend of being low on one side and high on the other side in the direction Y. Shapes having this trend can all be understood as the wedge shape herein. As shown in FIG. 15, the cross section of the pressure regulating member 800 perpendicular to the direction X is a right trapezoid, indicating that a hypotenuse of the right trapezoid of the top surface of the pressure regulating member 800 exhibits a trend of being low on one side and high on the other side in the direction Y, which is within the scope of the meaning of the wedge shape. In other embodiments, the cross section of the pressure regulating member 800 perpendicular to the direction X is as shown in FIG. 16, indicating that a continuous curve of the top surface exhibits a trend of being low on one side and high on the other side in the direction Y, which is within the scope of the meaning of the wedge shape. In addition, a change rate of the curve gradually decreases to 0 from the first side 800a to the second side 800b. The continuous curve indicates that the top surface of the pressure regulating member 800 is a curved surface. In other embodiments, the cross section of the pressure regulating member 800 perpendicular to the direction X is as shown in FIG. 17, indicating that a continuous broken line segment of the top surface exhibits a trend of being low on one side and high on the other side in the direction Y, which is within the scope of the meaning of the wedge shape. The continuous broken line segment includes a horizontal line segment and an inclined line segment connected to the horizontal line segment. In addition, from the first side 800a to the second side 800b, the inclined line segment shows an upward trend until it is connected to the horizontal line segment. When the battery module 700 is packaged into the battery pack lower box 601, the horizontal line segment is parallel to the module bottom wall 701a. The continuous broken line segment indicates that the top surface of the pressure regulating member 800 includes an upward inclined surface and a horizontal surface connected to the inclined surface and parallel to the module bottom wall 701a.

The pressure regulating member 800 is an entity obtained by extending the cross section perpendicular to the direction X in the module opposition region 602a along the direction X. When the battery module 700 is packaged into the battery pack lower box 601, close fitting between the module bottom wall 701a and the box bottom wall 602 limits the direction-Z size of the pressure regulating member 800 to be relatively small, and the direction-X size and direction-Y size of the pressure regulating member 800 to be relatively large, so that the overall pressure regulating member 800 takes a form of flat subplate.

The pressure regulating member 800 is made of polyhexamethylene adipamide (PA66). In other embodiments, the pressure regulating member 800 is made of other hard materials.

Close fitting between the bottom surface of the pressure regulating member 800 and the box bottom wall 602 is implemented through an adhesive. In other embodiments, the pressure regulating member 800 is integrated with the box bottom wall 602 to form an integral structure so as to achieve mechanical connection between the two. In this case, the material of the pressure regulating member 800 is consistent with the material of box bottom wall 602.

When the battery module 700 is packaged into the battery pack lower box 601, the spacing between the first side 800a of the pressure regulating member 800 close to the battery top cover 202a and the module bottom wall 701a is large, and the spacing between the second side 800b of the pressure regulating member 800 close to the battery bottom wall 202b and the module bottom wall 701a is small. When the bottom of the battery pack 1000 is squeezed, the box bottom wall 602 is squeezed and deformed to intrude into the accommodating space for accommodating the battery module 700, leading to a positive movement in the direction Z, and further leading to a positive movement of the pressure regulating member 800 in the direction Z. Coming into contact with and squeezing the module bottom wall 701a specifically means coming into contact with the top surface of the pressure regulating member 800 and squeezing the module bottom wall 701a. Since the distances from various positions of the top surface of the pressure regulating member 800 to the module bottom wall 701a in the direction Y are inconsistent, a position with a small spacing on the top surface of the pressure regulating member 800 comes into contact with and squeezes the module bottom wall 701a first, and a position with a large spacing comes into contact with and squeezes the module bottom wall 701a later. Specifically, the second side 800b of the pressure regulating member 800 with the smallest spacing first comes into contact with a position of the module bottom wall 701a close to the battery bottom wall 202b. In this case, the top surface of the pressure regulating member 800 starts to partially come into contact with the module bottom wall 701a. The first side 800a of the pressure regulating member 800 with the largest spacing finally comes into contact with a position of the module bottom wall 701a close to the battery top cover 202a. In this case, the top surface of the pressure regulating member 800 fully comes into contact with the module bottom wall 701a. This makes the position of the module bottom wall 701a close to the battery bottom wall 202b first bear a larger squeezing force, and the position of the module bottom wall 701a close to the battery top cover 202a then bear a smaller squeezing force. The module bottom wall 701a transmits the squeezing force to the battery cell 202 through a thickness surface of the battery housing 202c in the battery cell 202 covered by the module bottom wall 701a. The module bottom wall 701a first transmits a larger squeezing force to the position on the battery housing 202c far from the battery top cover 202a and close to the battery bottom wall 202b, and then transmits a smaller squeezing force to the position on the battery housing 202c close to the battery top cover 202a, thereby protecting the welded region between the battery top cover 202a and the battery housing 202c under a squeezing condition.

According to some embodiments of this application, optionally, still referring to FIGs. 11 to 14, the battery pack lower box 601 further includes a reinforcer 607 and a load-bearing wall 605 for bearing the battery module 700. In the transverse direction, the reinforcer 607 is disposed between two module opposition regions 602a and connected to the load-bearing wall 605, and supports the box bottom wall 602.

The load-bearing wall 605 is a plate in the battery pack lower box 601 for bearing the battery module 700, including two first box side plates 603 at two ends of the battery pack lower box 601 in the direction X and a partition 606 disposed in the accommodating space of the battery pack lower box 601.

The two first box side plates 603 and partition 606 are both disposed parallel to the direction Y of the coordinate system. The two ends of the first box side plates 603 and partition 606 in the direction Y are respectively connected to two second box side plates 604, and the bottoms of the first box side plates 603 and partition 606 are both connected to the box bottom wall 602.

In the direction X, the partition 606 is disposed at a middle position between the two first box side plates 603, dividing the accommodating space of the battery pack lower box 601 into two secondary accommodating spaces. The direction-X size of each secondary accommodating space is adapted to the direction-X size of one battery module 700. Each secondary accommodating space is used for accommodating one battery module 700 in the direction X. When the battery module 700 is packaged into the battery pack lower box 601, the two ends in the direction X of the module housing 701 of the battery module 700 are respectively supported and fixed by the first box side plate 603 and partition 606, so that the module bottom wall 701a is close to but not in contact with the box bottom wall 602.

The direction-Y size of each secondary accommodating space is adapted to the direction-Y size of at least two battery modules 700. Each secondary accommodating space is used for accommodating at least two battery modules 700 in the direction Y. Correspondingly, the at least two module opposition regions 602a are present in the direction Y of the box bottom wall 602. Specifically, each secondary accommodating space is used for accommodating four battery modules 700 in the direction Y. Correspondingly, in the direction Y of the box bottom wall 602, there are four module opposition regions 602a and three regions between the two module opposition regions 602a. In other embodiments, each secondary accommodating space is used for accommodating another quantity of battery modules 700 in the direction Y, and the another quantity is at least two.

The reinforcer 607 is a component for transmitting the squeezing force borne by the box bottom wall 602 to the load-bearing wall 605. The reinforcer 607 is disposed in the accommodating space of the battery pack lower box 601. Specifically, the direction-Z bottom surface of the reinforcer 607 sticks close to the region between the two module opposition regions 602a on the box bottom wall 602, and extends along the direction X to connect to first box side plate 603 and the partition 606, so that the squeezing force borne by the box bottom wall 602 under a squeezing condition is transmitted to the first box side plate 603 and the partition 606 through the reinforcer 607.

In the transverse direction (that is, the direction Y of the coordinate system) of the box bottom wall 602, the region between the two module opposition regions 602a is prone to large deformation when squeezed. Therefore, the reinforcer 607 is disposed in the region to connect to the load-bearing wall 605 so as to support the box bottom wall 602, improving the capability of the box bottom wall 602 to resist squeezing and deformation. When the box bottom wall 602 at the bottom of the battery pack 1000 is squeezed, the squeezing force applied to the box bottom wall 602 is transmitted to the first box side plate 603 and the partition 606 via the reinforcer 607. The first box side plate 603, the partition 606, and the reinforcer 607 jointly assist the box bottom wall 602 in resisting a positive movement in the direction Z caused by squeezing and deformation, reducing the displacement of the box bottom wall 602 intruding into the accommodating space of the battery pack lower box 601. When the battery module 700 is packaged into the battery pack lower box 601, structures such as the battery module 700 in the accommodating space of the battery pack lower box 601 are protected.

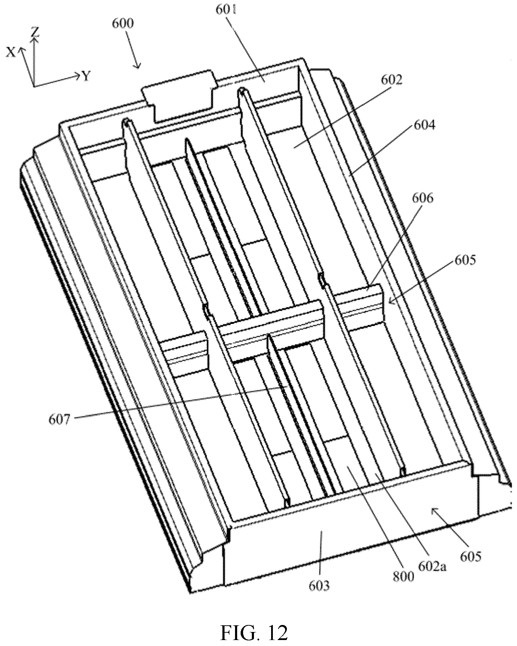

According to some embodiments of this application, optionally, still referring to FIGs. 12 to 14, the reinforcer 607 includes a platform part 607a and a ridge part 607b. The platform part 607a sticks close to the box bottom wall 602, and the ridge part 607b protrudes from the platform part 607a into the battery pack lower box 601 and is connected to the load-bearing wall 605.

The platform part 607a and the ridge part 607b are both strip-shaped plates. The direction-Z bottom surface of the platform part 607a is close to the region between the two module opposition regions 602a on the box bottom wall 602. The ridge part 607b protrudes from the direction-Z top surface of the platform part 607a along the direction Z into the accommodating space of the battery pack lower box 601, so that the reinforcer 607 has a T-shaped cross section perpendicular to the direction X. An entity obtained by extending the T-shaped cross section along the direction X is the reinforcer 607.

The protruding ridge part 607b is connected to the load-bearing wall 605. Specifically, a junction of the ridge part 607b and the first box side plate 603 and a junction of the ridge part 607b and the partition 606 are both welded for sufficient force transmission. When the battery module 700 is packaged into the battery pack lower box 601, the direction-Z top of ridge part 607b is roughly at the same direction-Z height as the direction-Z middle position of the battery module 700. In other embodiments, the ridge part 607b and the first box side plate 603 and partition 606 are connected in other manners.

The platform part 607a is configured to strengthen the connection between the reinforcer 607 and the box bottom wall 602. The connection relationship and connection manner between the platform part 607a and the load-bearing wall 605 are not limited herein.

The reinforcer 607 sticks close to the box bottom wall 602 through the direction-Z bottom surface of the platform part 607a, achieving a large-area surface contact between the reinforcer 607 and the box bottom wall 602, and increasing the contact area between the reinforcer 607 and the box bottom wall 602. When the box bottom wall 602 is squeezed, the load-bearing wall 605 and the reinforcer 607 have a good effect in preventing the box bottom wall 602 from intruding into the accommodating space of the battery pack lower box 601 under squeezing and deformation.

According to some embodiments of this application, optionally, still referring to FIGs. 12 to 14, the reinforcer 607 is disposed between first sides 800a of two pressure regulating members 800 facing towards each other.

In the transverse direction (that is, the direction Y of the coordinate system), there are multiple regions between the two module opposition regions 602a on the box bottom wall 602. When the battery module 700 is packaged into the battery pack lower box 601, the arrangement direction of the battery cells 202 in the battery module 700 affects disposition of the reinforcer 607 in the region between the two module opposition regions 602a. Specifically, the welded region between the battery housing 202c and the battery top cover 202a has a high priority of protection, while the region of the battery housing 202c close to the battery bottom wall 202b has a low priority of protection. Under the deployment requirements of the battery pack lower box 601, among all of the multiple regions between the two module opposition regions 602a, the reinforcer 607 cannot be disposed in some of the regions between the two module opposition regions 602a. In this case, the disposition of the reinforcer 607 on the regions between the two module opposition regions 602a should give priority to protecting the welded region between the battery housing 202c and the battery top cover 202a.

Specifically, there are three regions between the two module opposition regions 602a in the direction Y. When the battery module 700 is packaged into the battery pack lower box 601, the arrangement direction of the battery cells 202 in four battery modules 700 is as follows: regions between the module opposition regions 602a at two ends in the direction Y are close to the battery bottom wall 202b on their both sides; a region between the module opposition regions 602a at the middle position in the direction Y is close to the battery top cover 202a on its both sides; the priority of disposing the reinforcer 607 on the two regions at the two ends in the direction Y is low; and the priority of disposing the reinforcer 607 on the one region at the middle position in the direction Y is high. Therefore, the reinforcer 607 is disposed on the region at the middle position in the direction Y. That is, the reinforcer 607 is disposed between the first sides 800a of the two pressure regulating members 800 facing towards each other.

When the battery module 700 is packaged into the battery pack lower box 601, the region between the two module opposition regions 602a between the first sides 800a of the two pressure regulating members 800 facing towards each other is closer to a position of the module bottom wall 701a close to the battery top cover 202a. If the box bottom wall 602 is squeezed and deformed at that region, the welded region between the battery top cover 202a and a battery housing 202c with a low bearing capacity is prone to squeeze. Therefore, the reinforcer 607 is disposed between the first sides 800a of the two pressure regulating members 800 facing towards each other to prevent the box bottom wall 602 from intruding into that region under deformation, so as to protect the welded region between the battery top cover 202a and a battery housing 202c.

According to some embodiments of this application, optionally, still referring to FIGs. 12 to 14, the box bottom wall 602 further has a longitudinal direction perpendicular to the transverse direction, and the reinforcer 607 is disposed on a center line in the longitudinal direction.

The longitudinal direction is the direction X of the coordinate system, and the center line in the longitudinal direction is a line parallel to the direction X and at the middle position in the direction Y of the box bottom wall 602. The reinforcer 607 extends on the center line along the direction X.

As a thin plate, the box bottom wall 602 has its two edges in the direction Y respectively connected to the two second box side plates 604, having a weak capability to resist squeezing and deformation at the middle position in the direction Y. Therefore, the box bottom wall 602 is prone to large intrusion when squeezed and deformed at the middle position in the direction Y. When the battery module 700 is packaged into the battery pack lower box 601, the intrusion damages structures such as the battery module 700 in the accommodating space of the battery pack lower box 601. The center line in the longitudinal direction is located at the middle position in the direction Y.

The reinforcer 607 being disposed on the center line of the longitudinal direction of the region between the module opposition regions 602a improves the capability of the box bottom wall 602 to resist squeezing and deformation at the middle position in the direction Y. When the battery module 700 is packaged into the battery pack lower box 601, this protects structures such as the battery module 700.

According to some embodiments of this application, optionally, still referring to FIGs. 12 to 14, the box bottom wall 602 further has a longitudinal direction perpendicular to the transverse direction, and pressure regulating members 800 are disposed on two sides of the center line in the longitudinal direction respectively.

The longitudinal direction is the direction X of the coordinate system, and the center line in the longitudinal direction is a line parallel to the direction X and at the middle position in the direction Y of the box bottom wall 602. The pressure regulating members 800 are disposed on two sides of the direction Y of the center line.

As a thin plate, the box bottom wall 602 has its two edges in the direction Y respectively connected to the two second box side plates 604, having a weak capability to resist squeezing and deformation at the middle position in the direction Y. Therefore, the box bottom wall 602 is prone to large intrusion when squeezed and deformed at the middle position in the direction Y. When the battery module 700 is packaged into the battery pack lower box 601, the intrusion damages structures such as the battery module 700 in the accommodating space of the battery pack lower box 601. Therefore, the pressure regulating members 800 are disposed at the module opposition regions 602a on the two sides of the middle position in the direction Y. The center line in the longitudinal direction is located at the middle position in the direction Y. The pressure regulating members 800 are disposed on two sides of the direction Y of the center line of the longitudinal direction, that is, the pressure regulating members 800 are disposed on two sides of the middle position of the direction Y of the box bottom wall 602.

Specifically, there are four module opposition regions 602a in the direction Y of the box bottom wall 602. The pressure regulating members 800 are disposed on two module opposition regions 602a on two sides of the middle position in the direction Y. However, no pressure regulating member 800 is disposed on two module opposition regions 602a at two ends in the direction Y, because the two module opposition regions 602a are adjacent to the second box side plate 604. Therefore, the box bottom wall 602 has a good capability to resist squeezing and deformation at the two module opposition regions 602a. When the battery module 700 is packaged into the battery pack lower box 601, the two module opposition regions 602a well protect structures such as a corresponding battery module 700. In other embodiments, the pressure regulating members 800 may alternatively be disposed on the two module opposition regions 602a.

With the pressure regulating members 800 disposed at the module opposition regions 602a on the two sides of the middle position in the direction Y of the box bottom wall 602, it is ensured that when the box bottom wall 602 intrudes into the accommodating space due to significant squeezing and deformation at the middle position in the direction Y, the manner of transmitting a squeezing force from the box bottom wall 602 to the module bottom wall 701a on the two sides of the middle position in the direction Y is regulated. When the battery module 700 is packaged into the battery pack lower box 601, structures such as the battery modules 700 on the two sides of the middle position in the direction Y are protected.

According to some embodiments of this application, optionally, still referring to FIG. 18, the battery pack lower box 601 further includes a cushion member 900. The cushion member 900 is disposed on the pressure regulating member 800 and configured to stick close to the module bottom wall 701a.

The cushion member 900 is specifically a cushion pad, and a direction-Z top surface thereof is used to stick close to the module bottom wall 701a. When the battery module 700 is packaged into the battery pack lower box 601, the direction-Z top surface of the cushion pad sticks close to the module bottom wall 701a. The direction-Z bottom surface of the cushion pad faces towards the top surface of the pressure regulating member 800, partially in contact with the top surface of the pressure regulating member 800, supported and fixed by the higher second side 800b of the pressure regulating member 800, and having a spacing with the remaining positions of the top surface of the pressure regulating member 800.

When the battery module 700 is packaged into the battery pack lower box 601, if the box bottom wall 602 is subjected to impact, the cushion member 900 reduces an impact force transmitted from the pressure regulating member 800 to the module bottom wall 701a, and thus reduces an impact force transmitted from the module bottom wall 701a to the battery cell 202, protecting the battery module 700 and the battery cell 202.

According to some embodiments of this application, referring to FIG. 11 to FIG. 15, this application provides a battery pack lower box 601. The battery pack lower box 601 includes a box bottom wall 602 and a pressure regulating member 800 in a wedge shape.

The box bottom wall 602 has a module opposition region 602a, where the module opposition region 602a has a transverse direction and is disposed opposite the module bottom wall 701a of the battery module 700. When the battery module 700 is packaged into the battery pack lower box 601, the transverse direction is consistent with a height direction of battery cells 202 of the battery module 700, namely the direction Y of the coordinate system.

The pressure regulating member 800 is disposed in the module opposition region 602a, with its bottom surface fitting the box bottom wall 602. When the battery module 700 is packaged into the battery pack lower box 601, the pressure regulating member 800 has a spacing with the module bottom wall 701a and has its top surface facing the module bottom wall 701a and being close to but not in contact with the module bottom wall 701a. The overall pressure regulating member 800 takes a form of a flat subplate, and has a right trapezoid cross section perpendicular to the direction X. An entity obtained by extending the right trapezoid cross section in the module opposition region 602a along the direction X is the pressure regulating member 800. A hypotenuse of the right trapezoid of the top surface of the pressure regulating member 800 exhibits a trend of being low on one side and high on the other side in the direction Y. When the battery module 700 is packaged into the battery pack lower box 601, the low side of two sides of the hypotenuse of the right trapezoid closer to the battery top cover 202a of the battery cell 202 is the first side 800a, and the high side closer to the battery bottom wall 202b of the battery cell 202 is the second side 800b. A spacing between the first side 800a and the module bottom wall 701a is larger than a spacing between the second side 800b and the module bottom wall 701a.

The battery pack lower box 601 further includes a reinforcer 607 and a load-bearing wall 605 for bearing the battery module 700.

The load-bearing wall 605 is a plate in the battery pack lower box 601 for bearing the battery module 700, including two first box side plates 603 at two ends of the battery pack lower box 601 in the direction X and a partition 606 disposed in the accommodating space of the battery pack lower box 601.

The two first box side plates 603 and partition 606 are both disposed parallel to the direction Y of the coordinate system. The two ends of the first box side plates 603 and partition 606 in the direction Y are respectively connected to two second box side plates 604, and the bottoms of the first box side plates 603 and partition 606 are both connected to the box bottom wall 602.

In the direction X, the partition 606 is disposed at a middle position between the two first box side plates 603, dividing the accommodating space of the battery pack lower box 601 into two secondary accommodating spaces. The direction-X size of each secondary accommodating space is adapted to the direction-X size of one battery module 700. Each secondary accommodating space is used for accommodating one battery module 700 in the direction X. When the battery module 700 is packaged into the battery pack lower box 601, the two ends in the direction X of the module housing 701 of the battery module 700 are respectively supported and fixed by the first box side plate 603 and partition 606.

Each secondary accommodating space is used for accommodating four battery modules 700 in the direction Y. Correspondingly, in the direction Y of the box bottom wall 602, there are four module opposition regions 602a and three regions between the two module opposition regions 602a. Pressure regulating members 800 are disposed at the two module opposition regions 602a on the two sides of the middle position in the direction Y. The two pressure regulating members 800 are located on two sides of the center line in the longitudinal direction of the box bottom wall 602, while no pressure regulating member 800 is disposed at the two module opposition regions 602a at the two ends in the direction Y.

The reinforcer 607 is disposed in the region between the two module opposition regions 602a at the middle position in the direction Y, specifically extends on the center line of the longitudinal direction along the direction X, and is located between the first sides 800a of the two pressure regulating members 800 facing towards each other. The reinforcer 607 includes a platform part 607a and a ridge part 607b. The platform part 607a and the ridge part 607b are both strip-shaped plates. The bottom surface of the platform part 607a sticks close to the box bottom wall 602. The ridge part 607b protrudes from the top surface of the platform part 607a along the direction Z into the accommodating space of the battery pack lower box 601, so that the reinforcer 607 has a T-shaped cross section perpendicular to the direction X. An entity obtained by extending the T-shaped cross section along the direction X to connect to the first box side plate 603 and the partition 606 is the reinforcer 607.

A junction of the ridge part 607b and the first box side plate 603 and a junction of the ridge part 607b and the partition 606 are both welded. When the battery module 700 is packaged into the battery pack lower box 601, the direction-Z top of ridge part 607b is roughly at the same direction-Z height as the direction-Z middle position of the battery module 700.

The platform part 607a is configured to strengthen the connection between the reinforcer 607 and the box bottom wall 602. The connection relationship and connection manner between the platform part 607a and the load-bearing wall 605 are not limited herein.

## Claims

1. A battery pack lower box (601), comprising a box bottom wall (602), wherein the battery pack lower box (601) further comprises a pressure regulating member (800) in a wedge shape;
the box bottom wall (602) has a module opposition region (602a), wherein the module opposition region (602a) has a transverse direction and is disposed opposite a module bottom wall (701a) of a battery module (700), and the transverse direction is consistent with a height direction of battery cells (202) of the battery module (700); and
the pressure regulating member (800) is disposed in the module opposition region (602a), and the pressure regulating member (800) has a first side (800a) and a second side (800b) in the transverse direction, the first side (800a) being closer to a battery top cover (202a) of the battery cell (202) than the second side (800b), the second side (800b) being closer to a battery bottom wall (202b) of the battery cell (202) than the first side (800a), and a height of the first side (800a) being lower than a height of the second side (800b).

2. The battery pack lower box (601) according to claim 1, wherein the battery pack lower box (601) further comprises a reinforcer (607) and a load-bearing wall (605) for bearing the battery module (700), and in the transverse direction, the reinforcer (607) is disposed between two module opposition regions (602a) and connected to the load-bearing wall (605), and supports the box bottom wall (602).

3. The battery pack lower box (601) according to claim 2, wherein the reinforcer (607) comprises a platform part (607a) and a ridge part (607b), the platform part (607a) sticks close to the box bottom wall (602), and the ridge part (607b) protrudes from the platform part (607a) into the battery pack lower box (601) and is connected to the load-bearing wall (605).

4. The battery pack lower box (601) according to claim 2 or 3, wherein the reinforcer (607) is disposed between the first sides (800a) of the two pressure regulating members (800) facing towards each other.

5. The battery pack lower box (601) according to any one of claims 2 to 4, wherein the box bottom wall (602) further has a longitudinal direction perpendicular to the transverse direction, and the reinforcer (607) is disposed on a center line in the longitudinal direction.

6. The battery pack lower box (601) according to any one of claims 1 to 4, wherein the box bottom wall (602) further has a longitudinal direction perpendicular to the transverse direction, and the pressure regulating members (800) are disposed on two sides of a center line in the longitudinal direction respectively.

7. The battery pack lower box (601) according to any one of claims 1 to 5, wherein the battery pack lower box (601) further comprises a cushion member (900), and the cushion member (900) is disposed on the pressure regulating member (800) and configured to stick close to the module bottom wall (701a).

8. A battery pack (1000), comprising a battery module (700), with a battery pack lower box (601) according to claim 1.

## Patentansprüche

1. Batteriepack-Unterkasten (601), umfassend eine Kastenbodenwand (602), wobei der Batteriepack-Unterkasten (601) ferner ein Druckregelelement (800) in Keilform umfasst;
die Kastenbodenwand (602) einen Modulgegenbereich (602a) aufweist, wobei der Modulgegenbereich (602a) eine Querrichtung aufweist und einer Modulbodenwand (701a) eines Batteriemoduls (700) gegenüberliegt, und wobei die Querrichtung mit einer Höhenrichtung von Batteriezellen (202) des Batteriemoduls (700) übereinstimmt;
das Druckregelelement (800) in dem Modulgegenbereich (602a) angeordnet ist, und das Druckregelelement (800) in Querrichtung eine erste Seite (800a) und eine zweite Seite (800b) aufweist, wobei die erste Seite (800a) näher an einer Batteriedeckelwand (202a) der Batteriezelle (202) angeordnet ist als die zweite Seite (800b), die zweite Seite (800b) näher an einer Batteriebodenwand (202b) der Batteriezelle (202) angeordnet ist als die erste Seite (800a), und wobei eine Höhe der ersten Seite (800a) geringer ist als eine Höhe der zweiten Seite (800b).

2. Batteriepack-Unterkasten (601) nach Anspruch 1, wobei der Batteriepack-Unterkasten (601) ferner einen Verstärker (607) und eine Tragwand (605) zum Tragen des Batteriemoduls (700) umfasst, und wobei in Querrichtung der Verstärker (607) zwischen zwei Modulgegenbereichen (602a) angeordnet und mit der Tragwand (605) verbunden ist sowie die Kastenbodenwand (602) abstützt.

3. Batteriepack-Unterkasten (601) nach Anspruch 2, wobei der Verstärker (607) ein Plattformteil (607a) und ein Stegteil (607b) umfasst, wobei das Plattformteil (607a) an der Kastenbodenwand (602) anliegt, und wobei das Stegteil (607b) von dem Plattformteil (607a) in den Batteriepack-Unterkasten (601) hineinragt und mit der Tragwand (605) verbunden ist.

4. Batteriepack-Unterkasten (601) nach Anspruch 2 oder 3, wobei der Verstärker (607) zwischen den ersten Seiten (800a) der zwei Druckregelelemente (800) angeordnet ist, die einander zugewandt sind.

5. Batteriepack-Unterkasten (601) nach einem der Ansprüche 2 bis 4, wobei die Kastenbodenwand (602) ferner eine Längsrichtung senkrecht zur Querrichtung aufweist und der Verstärker (607) auf einer Mittellinie in Längsrichtung angeordnet ist.

6. Batteriepack-Unterkasten (601) nach einem der Ansprüche 1 bis 4, wobei die Kastenbodenwand (602) ferner eine Längsrichtung senkrecht zur Querrichtung aufweist und die Druckregelelemente (800) jeweils auf zwei Seiten einer Mittellinie in Längsrichtung angeordnet sind.

7. Batteriepack-Unterkasten (601) nach einem der Ansprüche 1 bis 5, wobei der Batteriepack-Unterkasten (601) ferner ein Polsterelement (900) umfasst und das Polsterelement (900) an dem Druckregelelement (800) angeordnet und dazu ausgelegt ist, an der Modulbodenwand (701a) anzuliegen.

8. Batteriepack (1000), umfassend ein Batteriemodul (700), mit einem Batteriepack-Unterkasten (601) nach Anspruch 1.

## Revendications

1. Boîtier inférieur de bloc-batterie (601), comprenant une paroi de fond de boîtier (602), le boîtier inférieur de bloc-batterie (601) comprenant en outre un élément de régulation de pression (800) en forme de coin ;
la paroi de fond de boîtier (602) présentant une zone d'opposition de module (602a), la zone d'opposition de module (602a) présentant une direction transversale et étant disposée en face d'une paroi inférieure de module (701a) d'un module de batterie (700), et la direction transversale étant cohérente avec la direction de hauteur des éléments de batterie (202) du module de batterie (700) ; et
l'élément de régulation de pression (800) étant disposé dans la zone d'opposition de module (602a), et l'élément de régulation de pression (800) présentant un premier côté (800a) et un second côté (800b) dans le sens transversal, le premier côté (800a) étant plus proche d'un couvercle supérieur de batterie (202a) de l'élément de batterie (202) que le second côté (800b), le second côté (800b) étant plus proche d'une paroi inférieure de batterie (202b) de l'élément de batterie (202) que le premier côté (800a), et une hauteur du premier côté (800a) étant plus basse qu'une hauteur du second côté (800b).

2. Boîtier inférieur de bloc-batterie (601) selon la revendication 1, le boîtier inférieur de bloc-batterie (601) comprenant en outre un renfort (607) et une paroi porteuse de charge (605) pour supporter le module de batterie (700), et dans la direction transversale, le renfort (607) étant disposé entre deux zones d'opposition de module (602a) et relié à la paroi porteuse de charge (605), et supportant la paroi de fond de boîtier (602).

3. Boîtier inférieur de bloc-batterie (601) selon la revendication 2, le renfort (607) comprenant une partie plate-forme (607a) et une partie nervure (607b), la partie plate-forme (607a) collant à proximité de la paroi de fond de boîtier (602), et la partie nervure (607b) faisant saillie de la partie plate-forme (607a) dans le boîtier inférieur de bloc-batterie (601) et étant reliée à la paroi porteuse de charge (605).

4. Boîtier inférieur de bloc-batterie (601) selon la revendication 2 ou 3, le renfort (607) étant disposé entre les premiers côtés (800a) des deux éléments de régulation de pression (800) se faisant face l'un à l'autre.

5. Boîtier inférieur de bloc-batterie (601) selon l'une quelconque des revendications 2 à 4, la paroi de fond de boîtier (602) ayant en outre une direction longitudinale perpendiculaire à la direction transversale, et le renfort (607) étant disposé sur une ligne centrale dans la direction longitudinale.

6. Boîtier inférieur de bloc-batterie (601) selon l'une quelconque des revendications 1 à 4, la paroi de fond de boîtier (602) ayant en outre une direction longitudinale perpendiculaire à la direction transversale, et les éléments de régulation de pression (800) étant disposés sur deux côtés d'une ligne centrale dans la direction longitudinale respectivement.

7. Boîtier inférieur de bloc-batterie (601) selon l'une quelconque des revendications 1 à 5, le boîtier inférieur de bloc-batterie (601) comprenant en outre un élément coussin (900), et l'élément coussin (900) étant disposé sur l'élément de régulation de pression (800) et conçu pour adhérer à proximité de la paroi inférieure de module (701a).

8. Bloc-batterie (1000), comprenant un module de batterie (700), doté d'un boîtier inférieur de bloc-batterie (601) selon la revendication 1.
